(19) Europäisches Patentamt
European Patent Office
Office européen des brevets

(11) **EP 3 390 475 B1**

(12) **EUROPEAN PATENT SPECIFICATION**

(45) Date of publication and mention of the grant of the patent:
**21.05.2025 Bulletin 2025/21**

(21) Application number: **16829346.2**

(22) Date of filing: **13.12.2016**

(51) International Patent Classification (IPC):
***C08F 210/16*** *(2006.01)* ***C08F 295/00*** *(2006.01)*
***C08L 53/00*** *(2006.01)* ***C08L 23/10*** *(2006.01)*
***C08L 23/08*** *(2025.01)* ***C08F 10/00*** *(2006.01)*
***C08F 297/00*** *(2006.01)* ***C08F 297/08*** *(2006.01)*
***C08J 9/00*** *(2006.01)* ***C08F 4/659*** *(2006.01)*
***C08J 9/10*** *(2006.01)* ***C08L 23/0807*** *(2025.01)*

(52) Cooperative Patent Classification (CPC):
(C-Sets available)
**C08L 23/0815; C08F 210/16; C08F 297/08; C08J 9/0023; C08J 9/0061; C08J 9/0066; C08J 9/103; C08L 53/00;** C08F 4/659; C08F 4/65908; C08F 2410/01; C08J 2201/026; C08J 2203/04; C08J 2207/00; C08J 2353/00;
(Cont.)

(86) International application number:
**PCT/US2016/066332**

(87) International publication number:
**WO 2017/106166 (22.06.2017 Gazette 2017/25)**

(54) **CROSS-LINKED FOAMS MADE FROM INTERPOLYMERS OF ETHYLENE/ALPHA-OLEFINS**

AUS ETHYLEN/ALPHA-OLEFIN-MISCHPOLYMEREN HERGESTELLTE VERNETZTE SCHAUMSTOFFE

MOUSSES RÉTICULÉES FABRIQUEES A PARTIR D'INTERPOLYMERES D'ETHYLENE / ALPHA-OLEFINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2015 US 201562267381 P**

(43) Date of publication of application:
**24.10.2018 Bulletin 2018/43**

(73) Proprietor: **Dow Global Technologies LLC**
**Midland, MI 48674 (US)**

(72) Inventors:
- **KUMMER, Kyle G.**
**Freeport**
**TX 77541 (US)**
- **MUNRO, Jeffrey C.**
**Freeport**
**TX 77541 (US)**
- **MADENJIAN, Lisa S.**
**Freeport**
**TX 77541 (US)**

(74) Representative: **Boult Wade Tennant LLP**
**Salisbury Square House**
**8 Salisbury Square**
**London EC4Y 8AP (GB)**

(56) References cited:
**WO-A1-2006/099631**
**KR-B1- 101 466 388**
**US-A1- 2008 009 586**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
C08J 2423/08; C08J 2431/04; C08L 2312/00

C-Sets
**C08F 210/16, C08F 4/64048;**
**C08F 210/16, C08F 4/64144;**
**C08F 210/16, C08F 4/65904;**
**C08F 210/16, C08F 210/08, C08F 2500/03, C08F 2500/09, C08F 2500/12, C08F 2500/20; C08L 23/0815, C08L 23/0853;**
**C08L 53/00, C08K 5/101, C08K 2003/2296, C08K 2003/267;**
C08F 210/16, C08F 210/14, C08F 2500/03, C08F 2500/11, C08F 2500/12, C08F 2500/20, C08F 2500/21;
C08F 210/16, C08F 210/14, C08F 2500/03, C08F 2500/12, C08F 2500/20;
C08F 210/16, C08F 210/14, C08F 2500/09, C08F 2500/11, C08F 2500/12, C08F 2500/17, C08F 2500/20

## Description

### Field

The present disclosure relates to foams comprising at least one ethylene/α-olefin interpolymer and methods of making and using the foams in various applications, such as footwear applications.

### Introduction

Ethylene vinyl acetate copolymers (EVA), polyolefins (PO), olefin block copolymers (OBC) and blends thereof are used to fabricate foam products in footwear applications such as inner soles, midsoles, outer soles, unisoles, and sole inserts. In particular, OBC's have been shown to provide for cross-linked foams with excellent resiliency over a range of temperatures and over many compression-recovery cycles. However, there are still needs for improved foams having high rebound resilience without limited split tear strength, which could result in premature failure of foam products. Accordingly, the present disclosure relates to novel foam formulations of a particular design (e.g., particular foam densities and polymer crystallinities) that provide a unique balance of resiliency, high temperature compression set, rebound, and foam split tear strength.
WO 2006/099631 relates to foams made from interpolymers of ethylene/α-olefins.
US 2008/009586 relates to dispersions of olefin block copolymers.
KR 101466388 relates to cleaning foam for a concrete pump.

### Summary

The present invention relates to a foam composition comprising at least one ethylene/α-olefin interpolymer comprising at least one soft segment and at least one hard segment, wherein a hard segment is a block of polymerized units in which the comonomer content is less than 5 wt.%, based on the weight of the polymer, and wherein a soft segment is a block of polymerized units in which the comonomer content is greater than 5 wt.%, based on the weight of the polymer, wherein the foam composition has a density of from 0.10 g/cc to 0.50 g/cc, wherein the ethylene/α-olefin interpolymer has a density of from 0.877 g/cc to 0.895 g/cc, wherein the at least one soft segment has a comonomer content of from 12 mol% to 14 mol %, and wherein the ethylene/α-olefin interpolymer:

(a) has a $M_w/M_n$ from 1.7 to 3.5, at least one melting point, $T_m$, in degrees Celsius, and a density, d, in grams/cubic centimeter, wherein the numerical values of $T_m$ and d correspond to the relationship:

$$T_m \geqq -2002.9 + 4538.5(d) - 2422.2(d)^2$$

.

### Brief Description of the Figures

FIG. 1 illustrates aspects of the methodology used to measure the split tear strength of foam samples.

### Detailed Description

*General Definitions*

"Polymer" means a polymeric compound prepared by polymerizing monomers, whether of the same or a different type. The generic term "polymer" embraces the terms "homopolymer," "copolymer," "terpolymer" as well as "interpolymer."
"Interpolymer" means a polymer prepared by the polymerization of at least two different types of monomers. The generic term "interpolymer" includes the term "copolymer" (which is usually employed to refer to a polymer prepared from two different monomers) as well as the term "terpolymer" (which is usually employed to refer to a polymer prepared from three different types of monomers). It also encompasses polymers made by polymerizing four or more types of monomers.
The term "ethylene/α-olefin interpolymer" generally refers to polymers comprising ethylene and an α-olefin having 3 or more carbon atoms. Preferably, ethylene comprises the majority mole fraction of the whole polymer, i.e., ethylene comprises at least 50 mole percent of the whole polymer. More preferably ethylene comprises at least 60 mole percent, at least 70 mole percent, or at least 80 mole percent, with the substantial remainder of the whole polymer comprising at least one other comonomer that is preferably an α-olefin having 3 or more carbon atoms. For many

ethylene/octene copolymers, the preferred composition comprises an ethylene content greater than 80 mole percent of the whole polymer and an octene content of from 5 to 20, preferably from 7 to 15 mole percent of the whole polymer. In some embodiments, the ethylene/α-olefin interpolymers do not include those produced in low yields or in a minor amount or as a by-product of a chemical process. While the ethylene/α-olefin interpolymers can be blended with one or more polymers, the as-produced ethylene/α-olefin interpolymers are substantially pure and often comprise a major component of the reaction product of a polymerization process.

The ethylene/α-olefin interpolymers comprise ethylene and one or more copolymerizable α-olefin comonomers in polymerized form, characterized by multiple blocks or segments of two or more polymerized monomer units differing in chemical or physical properties. That is, the ethylene/α-olefin interpolymers are block interpolymers, preferably multi-block interpolymers or copolymers. The terms "interpolymer" and copolymer" are used interchangeably herein. The terms "block" and "segment" are used interchangeably herein. In some embodiments, the multi-block copolymer can be represented by the following formula:

$$(AB)_n$$

where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, As and Bs are linked in a substantially linear fashion, as opposed to a substantially branched or substantially starshaped fashion. In other embodiments, A blocks and B blocks are randomly distributed along the polymer chain. In other words, the block copolymers usually do not have a structure as follows.

AAA-AA-BBB-BB

In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

The multi-block polymers typically comprise various amounts of "hard" and "soft" segments. "Hard" segments refer to blocks of polymerized units in which ethylene is present in an amount greater than 95 weight percent, and preferably greater than 98 weight percent based on the weight of the polymer. In other words, the comonomer content (content of monomers other than ethylene) in the hard segments is less than 5 weight percent, and preferably less than 2 weight percent based on the weight of the polymer. In some embodiments, the hard segments comprises all or substantially all ethylene. "Soft" segments, on the other hand, refer to blocks of polymerized units in which the comonomer content (content of monomers other than ethylene) is greater than 5 weight percent, preferably greater than 8 weight percent, greater than 10 weight percent, or greater than 15 weight percent based on the weight of the polymer. In some embodiments, the comonomer content in the soft segments can be greater than 20 weight percent, greater than 25 weight percent, greater than 30 weight percent, greater than 35 weight percent, or greater than 40 weight percent. The comonomer content in the soft segments of the ethylene/α-olefin interpolymers of the present disclosure is from 12 mol% to 14 mol%. For example, the soft segments of the ethylene/α-olefin interpolymers of the present disclosure have an octene content of from 12 mol% to 14 mol%.

The soft segments can often be present in a block interpolymer from 1 weight percent to 99 weight percent of the total weight of the block interpolymer, preferably from 5 weight percent to 95 weight percent, from 10 weight percent to 90 weight percent, from 15 weight percent to 85 weight percent, from 20 weight percent to 80 weight percent, from 25 weight percent to 75 weight percent, from 30 weight percent to 70 weight percent, from 35 weight percent to 65 weight percent, from 40 weight percent to 60 weight percent, or from 45 weight percent to 55 weight percent of the total weight of the block interpolymer. Conversely, the hard segments can be present in similar ranges. The soft segment melting temperature, soft segment weight percentage, hard segment weight percentage, and comonomer content of the soft segment can be calculated based on data obtained from DSC or NMR. Such methods and calculations are disclosed in WO 2006/101966 A1.

The term "crystalline" if employed, refers to a polymer that possesses a first order transition or crystalline melting point (Tm) as determined by differential scanning calorimetry (DSC). The term can be used interchangeably with the term "semicrystalline". The term "amorphous" refers to a polymer lacking a crystalline melting point as determined by differential scanning calorimetry (DSC) or equivalent technique.

The term "multi-block copolymer" or "segmented copolymer" refers to a polymer comprising two or more chemically distinct regions or segments (referred to as "blocks") preferably joined in a linear manner, that is, a polymer comprising chemically differentiated units which are joined end-to-end with respect to polymerized ethylenic functionality, rather than in pendent or grafted fashion. In a preferred embodiment, the blocks differ in the amount or type of comonomer incorporated therein, the density, the amount of crystallinity, the crystallite size attributable to a polymer of such composition, the type or degree of tacticity (isotactic or syndiotactic), regio-regularity or regio-irregularity, the amount

of branching, including long chain branching or hyper-branching, the homogeneity, or any other chemical or physical property. The multi-block copolymers are characterized by unique distributions of both polydispersity index (PDI or Mw/Mn), block length distribution, and/or block number distribution due to the unique process making of the copolymers. More specifically, when produced in a continuous process, the polymers desirably possess PDI from 1.7 to 2.9. When produced in a batch or semi-batch process, the polymers possess PDI from 1.0 to 2.9.

In the following description, all numbers disclosed herein are approximate values, regardless whether the word "about" or "approximate" is used in connection therewith. They may vary by 1 percent, 2 percent, 5 percent, or, sometimes, 10 to 20 percent. Whenever a numerical range with a lower limit, $R^L$ and an upper limit, $R^U$, is disclosed, any number falling within the range is specifically disclosed. In particular, the following numbers within the range are specifically disclosed: $R=R^L+k*(R^U-R^L)$, wherein k is a variable ranging from 1 percent to 100 percent with a 1 percent increment, i.e., k is 1 percent, 2 percent, 3 percent, 4 percent, 5 percent, ... , 50 percent, 51 percent, 52 percent, ... , 95 percent, 96 percent, 97 percent, 98 percent, 99 percent, or 100 percent. Moreover, any numerical range defined by two R numbers as defined in the above is also specifically disclosed.

Embodiments of the invention provide foams comprising at least one ethylene/α-olefin interpolymer disclosed herein wherein the foam has a density of from 0.10 g/cc to 0.50 g/cc. The foams disclosed herein can be prepared from a foamable composition comprising at least one ethylene/α-olefin interpolymer, a blowing agent and a cross-linking agent. The foams possess a balance of desirable properties that are suitable for a variety of applications, such as footwear applications. In some embodiments, the ethylene/α-olefin interpolymers are a multi-block copolymer comprising at least one soft block and at least one hard block. In other embodiments, the foam is cross-linked. When cross-linked, the foam may have a gel content of more than 5 weight percent, preferably from 5 to 90 weight percent and more preferably from 30 to 70 weight percent according to ASTM D-2765-84, method A.

Ethylene/α-Olefin Interpolymers

The ethylene/α-olefin interpolymers used in embodiments of the invention (also referred to as "inventive interpolymer" or "inventive polymer") comprise ethylene and one or more copolymerizable α-olefin comonomers in polymerized form, characterized by multiple blocks or segments of two or more polymerized monomer units differing in chemical or physical properties (block interpolymer), preferably a multi-block copolymer. The ethylene/α-olefin interpolymers are characterized by one or more of the aspects described as follows.

In one aspect, the ethylene/α-olefin interpolymers used in embodiments of the invention have a $M_w/M_n$ from 1.7 to 3.5 and at least one melting point, $T_m$, in degrees Celsius and density, d, in grams/cubic centimeter, wherein the numerical values of the variables correspond to the relationship:

$$T_m > -2002.9 + 4538.5(d) - 2422.2(d)^2,$$

and preferably

$$T_m \geqq -6288.1 + 13141(d) - 6720.3(d)^2,$$

and more preferably

$$T_m \geqq 858.91 - 1825.3(d) + 1112.8(d)^2.$$

Optionally, the ethylene/α-olefin interpolymers comprise, in polymerized form, ethylene and one or more α-olefins and are characterized by a ΔT, in degree Celsius, defined as the temperature for the tallest Differential Scanning Calorimetry ("DSC") peak minus the temperature for the tallest Crystallization Analysis Fractionation ("CRYSTAF") peak and a heat of fusion in J/g, ΔH, and ΔT and ΔH satisfy the following relationships:

$$\Delta T > -0.1299(\Delta H) + 62.81,$$

and preferably

$$\Delta T \geqq -0.1299(\Delta H) + 64.38,$$

and more preferably

$$\Delta T \geqq -0.1299(\Delta H)+65.95,$$

for ΔH up to 130 J/g. Moreover, ΔT is equal to or greater than 48° C. for ΔH greater than 130 J/g. The CRYSTAF peak is determined using at least 5 percent of the cumulative polymer (that is, the peak must represent at least 5 percent of the cumulative polymer), and if less than 5 percent of the polymer has an identifiable CRYSTAF peak, then the CRYSTAF temperature is 30° C., and ΔH is the numerical value of the heat of fusion in J/g. More preferably, the highest CRYSTAF peak contains at least 10 percent of the cumulative polymer.

Optionally, the ethylene/α-olefin interpolymers have a molecular fraction which elutes between 40° C. and 130° C. when fractionated using Temperature Rising Elution Fractionation ("TREF"), characterized in that said fraction has a molar comonomer content higher, preferably at least 5 percent higher, more preferably at least 10 percent higher, than that of a comparable random ethylene interpolymer fraction eluting between the same temperatures, wherein the comparable random ethylene interpolymer contains the same comonomer(s), and has a melt index, density, and molar comonomer content (based on the whole polymer) within 10 percent of that of the block interpolymer. Preferably, the $M_w/M_n$ of the comparable interpolymer is also within 10 percent of that of the block interpolymer and/or the comparable interpolymer has a total comonomer content within 10 weight percent of that of the block interpolymer.

Optionally, the ethylene/α-olefin interpolymers are characterized by an elastic recovery, Re, in percent at 300 percent strain and 1 cycle measured on a compression-molded film of an ethylene/α-olefin interpolymer, and has a density, d, in grams/cubic centimeter, wherein the numerical values of Re and d satisfy the following relationship when ethylene/α-olefin interpolymer is substantially free of a cross-linked phase:

$$Re > 1481-1629(d);$$

and preferably

$$Re \geqq 1491-1629(d);$$

and more preferably

$$Re \geqq 1501-1629(d);$$

and even more preferably

$$Re \geqq 1511-1629(d).$$

In some embodiments, the ethylene/α-olefin interpolymers have a tensile strength above 10 MPa, preferably a tensile strength≧11 MPa, more preferably a tensile strength≧ 13 MPa and/or an elongation at break of at least 600 percent, more preferably at least 700 percent, highly preferably at least 800 percent, and most highly preferably at least 900 percent at a crosshead separation rate of 11 cm/minute.

In other embodiments, the ethylene/α-olefin interpolymers have (1) a storage modulus ratio, G'(25° C.)/G'(100° C.), of from 1 to 50, preferably from 1 to 20, more preferably from 1 to 10; and/or (2) a 70° C. compression set of less than 80 percent, preferably less than 70 percent, especially less than 60 percent, less than 50 percent, or less than 40 percent, down to a compression set of 0 percent.

In still other embodiments, the ethylene/α-olefin interpolymers have a 70° C. compression set of less than 80 percent, or less than 70 percent.

In some embodiments, the ethylene/α-olefin interpolymers have a heat of fusion of less than 85 J/g and/or a pellet blocking strength of equal to or less than 4800 Pa (100 pounds/$foot^2$), preferably equal to or less than 2400 Pa (50 $lbs/ft^2$), especially equal to or less than 240 Pa (5 $lbs/ft^2$), and as low as 0 Pa (0 $lbs/ft^2$).

In other embodiments, the ethylene/α-olefin interpolymers comprise, in polymerized form, at least 50 mole percent ethylene and have a 70° C. compression set of less than 80 percent, or preferably less than 70 percent.

In some embodiments, the multi-block copolymers possess a PDI fitting a Schultz-Flory distribution rather than a Poisson distribution. The copolymers are further characterized as having both a polydisperse block distribution and a polydisperse distribution of block sizes and possessing a most probable distribution of block lengths. Preferred multi-block copolymers are those containing 4 or more blocks or segments including terminal blocks. More preferably, the copolymers include at least 5, 10 or 20 blocks or segments including terminal blocks.

Comonomer content is measured using techniques based on nuclear magnetic resonance ("NMR") spectroscopy. Moreover, for polymers or blends of polymers having relatively broad TREF curves, the polymer desirably is first

fractionated using TREF into fractions each having an eluted temperature range of 10° C. or less. That is, each eluted fraction has a collection temperature window of 10° C. or less. Using this technique, said block interpolymers have at least one such fraction having a higher molar comonomer content than a corresponding fraction of the comparable interpolymer.

In another aspect, the inventive polymer is an olefin interpolymer, preferably comprising ethylene and one or more copolymerizable comonomers in polymerized form, characterized by multiple blocks (i.e., at least two blocks) or segments of two or more polymerized monomer units differing in chemical or physical properties (blocked interpolymer), most preferably a multi-block copolymer, said block interpolymer having a peak (but not just a molecular fraction) which elutes between 40° C. and 130° C. (but without collecting and/or isolating individual fractions), characterized in that said peak, has a comonomer content estimated by infra-red spectroscopy when expanded using a full width/half maximum (FWHM) area calculation, has an average molar comonomer content higher, preferably at least 5 percent higher, more preferably at least 10 percent higher, than that of a comparable random ethylene interpolymer peak at the same elution temperature and expanded using a full width/half maximum (FWHM) area calculation, wherein said comparable random ethylene interpolymer has the same comonomer(s) and has a melt index, density, and molar comonomer content (based on the whole polymer) within 10 percent of that of the blocked interpolymer. Preferably, the $M_w/M_n$ of the comparable interpolymer is also within 10 percent of that of the blocked interpolymer and/or the comparable interpolymer has a total comonomer content within 10 weight percent of that of the blocked interpolymer. The full width/half maximum (FWHM) calculation is based on the ratio of methyl to methylene response area $[CH_3/CH_2]$ from the ATREF infra-red detector, wherein the tallest (highest) peak is identified from the base line, and then the FWHM area is determined. For a distribution measured using an ATREF peak, the FWHM area is defined as the area under the curve between $T_1$ and $T_2$, where $T_1$ and $T_2$ are points determined, to the left and right of the ATREF peak, by dividing the peak height by two, and then drawing a line horizontal to the base line, that intersects the left and right portions of the ATREF curve. A calibration curve for comonomer content is made using random ethylene/α-olefin copolymers, plotting comonomer content from NMR versus FWHM area ratio of the TREF peak. For this infra-red method, the calibration curve is generated for the same comonomer type of interest. The comonomer content of TREF peak of the inventive polymer can be determined by referencing this calibration curve using its FWHM methyl:methylene area ratio $[CH_3/CH_2]$ of the TREF peak.

Comonomer content is measured with techniques based on nuclear magnetic resonance (NMR) spectroscopy. Using this technique, said blocked interpolymers has higher molar comonomer content than a corresponding comparable interpolymer.

Preferably, for interpolymers of ethylene and 1-octene, the block interpolymer has a comonomer content of the TREF fraction eluting between 40 and 130° C. greater than or equal to the quantity (-0.2013)T+20.07, more preferably greater than or equal to the quantity (-0.2013)T+21.07, where T is the numerical value of the peak elution temperature of the TREF fraction being compared, measured in °C.

In addition to the above aspects and properties described herein, the inventive polymers can be characterized by one or more additional characteristics. As described herein, but not within the scope of the invention, the polymer is an olefin interpolymer, preferably comprising ethylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40° C. and 130° C., when fractionated using TREF increments, characterized in that said fraction has a molar comonomer content higher, preferably at least 5 percent higher, more preferably at least 10, 15, 20 or 25 percent higher, than that of a comparable random ethylene interpolymer fraction eluting between the same temperatures, wherein said comparable random ethylene interpolymer comprises the same comonomer(s), preferably it is the same comonomer(s), and a melt index, density, and molar comonomer content (based on the whole polymer) within 10 percent of that of the blocked interpolymer. Preferably, the $M_w/M_n$ of the comparable interpolymer is also within 10 percent of that of the blocked interpolymer and/or the comparable interpolymer has a total comonomer content within 10 weight percent of that of the blocked interpolymer.

Preferably, the above interpolymers are interpolymers of ethylene and at least one α-olefin, especially those interpolymers having a whole polymer density from 0.877 to 0.895 g/cm$^3$, and more especially for polymers having more than 1 mole percent comonomer, the blocked interpolymer has a comonomer content of the TREF fraction eluting between 40 and 130° C. greater than or equal to the quantity (-0.1356)T+13.89, more preferably greater than or equal to the quantity (-0.1356)T+14.93, and most preferably greater than or equal to the quantity (-0.2013)T+21.07, where T is the numerical value of the peak ATREF elution temperature of the TREF fraction being compared, measured in °C.

Preferably, for the above interpolymers of ethylene and at least one alpha-olefin especially those interpolymers having a whole polymer density from 0.877 to 0.895 g/cm$^3$, and more especially for polymers having more than 1 mole percent comonomer, the blocked interpolymer has a comonomer content of the TREF fraction eluting between 40 and 130° C. greater than or equal to the quantity (-0.2013)T+20.07, more preferably greater than or equal to the quantity (-0.2013)T+21.07, where T is the numerical value of the peak elution temperature of the TREF fraction being compared, measured in °C.

In one embodiment, the polymer is an olefin interpolymer, preferably comprising ethylene and one or more

copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40° C. and 130° C., when fractionated using TREF increments, characterized in that every fraction having a comonomer content of at least 6 mole percent, has a melting point greater than 100° C. For those fractions having a comonomer content from 3 mole percent to 6 mole percent, every fraction has a DSC melting point of 110° C. or higher. More preferably, said polymer fractions, having at least 1 mol percent comonomer, has a DSC melting point that corresponds to the equation:

$$Tm \geqq (-5.5926)(\text{mol percent comonomer in the fraction}) + 135.90.$$

In one embodiment, the polymer is an olefin interpolymer, preferably comprising ethylene and one or more copolymerizable comonomers in polymerized form, characterized by multiple blocks or segments of two or more polymerized monomer units differing in chemical or physical properties (blocked interpolymer), most preferably a multi-block copolymer, said block interpolymer having a molecular fraction which elutes between 40° C. and 130° C., when fractionated using TREF increments, characterized in that every fraction that has an ATREF elution temperature greater than or equal to 76° C., has a melt enthalpy (heat of fusion) as measured by DSC, corresponding to the equation:

$$\text{Heat of fusion (J/gm)} \leqq (3.1718)(\text{ATREF elution temperature in Celsius}) - 136.58,$$

In one embodiment, the block interpolymers have a molecular fraction which elutes between 40° C. and 130° C., when fractionated using TREF increments, characterized in that every fraction that has an ATREF elution temperature between 40° C. and less than 76° C., has a melt enthalpy (heat of fusion) as measured by DSC, corresponding to the equation:

$$\text{Heat of fusion (J/gm)} \leqq (1.1312)(\text{ATREF elution temperature in Celsius}) + 22.97.$$

ATREF Peak Comonomer Composition Measurement by Infra-Red Detector

The comonomer composition of the TREF peak can be measured using an IR4 infra-red detector available from Polymer Char, Valencia, Spain (http://www.polymerchar.com/).

The "composition mode" of the detector is equipped with a measurement sensor ($CH_2$) and composition sensor ($CH_3$) that are fixed narrow band infra-red filters in the region of 2800-3000 $cm^{-1}$. The measurement sensor detects the methylene ($CH_2$) carbons on the polymer (which directly relates to the polymer concentration in solution) while the composition sensor detects the methyl ($CH_3$) groups of the polymer. The mathematical ratio of the composition signal ($CH_3$) divided by the measurement signal ($CH_2$) is sensitive to the comonomer content of the measured polymer in solution and its response is calibrated with known ethylene alpha-olefin copolymer standards.

The detector when used with an ATREF instrument provides both a concentration ($CH_2$) and composition ($CH_3$) signal response of the eluted polymer during the TREF process. A polymer specific calibration can be created by measuring the area ratio of the $CH_3$ to $CH_2$ for polymers with known comonomer content (preferably measured by NMR). The comonomer content of an ATREF peak of a polymer can be estimated by applying a the reference calibration of the ratio of the areas for the individual $CH_3$ and $CH_2$ response (i.e. area ratio $CH_3/CH_2$ versus comonomer content).

The area of the peaks can be calculated using a full width/half maximum (FWHM) calculation after applying the appropriate baselines to integrate the individual signal responses from the TREF chromatogram. The full width/half maximum calculation is based on the ratio of methyl to methylene response area [$CH_3/CH_2$] from the ATREF infra-red detector, wherein the tallest (highest) peak is identified from the base line, and then the FWHM area is determined. For a distribution measured using an ATREF peak, the FWHM area is defined as the area under the curve between T1 and T2, where T1 and T2 are points determined, to the left and right of the ATREF peak, by dividing the peak height by two, and then drawing a line horizontal to the base line, that intersects the left and right portions of the ATREF curve.

The application of infra-red spectroscopy to measure the comonomer content of polymers in this A TREF-infrared method is, in principle, similar to that of GPC/FTIR systems as described in the following references: Markovich, Ronald P.; Hazlitt, Lonnie G.; Smith, Linley; "Development of gel-permeation chromatography-Fourier transform infrared spectroscopy for characterization of ethylene-based polyolefin copolymers". Polymeric Materials Science and Engineering (1991), 65, 98-100.; and Deslauriers, P. J.; Rohlfing, D. C.; Shieh, E. T.; "Quantifying short chain branching microstructures in ethylene-1-olefin copolymers using size exclusion chromatography and Fourier transform infrared spectroscopy (SEC-FTIR)", Polymer (2002), 43, 59-170.

In other embodiments, the inventive ethylene/$\alpha$-olefin interpolymer is characterized by an average block index, ABI, (as discussed in U.S. Patent No. 7,608,668, U.S. Patent No. 7,893,166, U.S. Patent No. 7,666,918, and WO 2006/101966) which is greater than zero and up to 1.0 and a molecular weight distribution, $M_w/M_n$, greater than 1.3. The

average block index, ABI, is the weight average of the block index ("BI") for each of the polymer fractions obtained in preparative TREF from 20° C. and 110° C., with an increment of 5° C.:

$$ABI=\Sigma(w_i BI_i)$$

where $BI_i$ is the block index for the ith fraction of the inventive ethylene/α-olefin interpolymer obtained in preparative TREF, and $w_i$ is the weight percentage of the ith fraction.

For each polymer fraction, BI is defined by one of the two following equations (both of which give the same BI value):

$$= \frac{1/T_X - 1/T_{XO}}{1/T_A - 1/T_{AB}} \text{ or } BI = -\frac{LnP_X - LnP_{XO}}{LnP_A - LnP_{AB}}$$

where $T_X$ is the ATREF elution temperature for the ith fraction (preferably expressed in Kelvin), $P_X$ is the ethylene mole fraction for the ith fraction, which can be measured by NMR or IR as described above. $P_{AB}$ is the ethylene mole fraction of the whole ethylene/α-olefin interpolymer (before fractionation), which also can be measured by NMR or IR. $T_A$ and $P_A$ are the ATREF elution temperature and the ethylene mole fraction for pure "hard segments" (which refer to the crystalline segments of the interpolymer). As a first order approximation, the $T_A$ and $P_A$ values are set to those for high density polyethylene homopolymer, if the actual values for the "hard segments" are not available. For calculations performed herein, $T_A$ is 372° K, $P_A$ is 1.

$T_{AB}$ is the ATREF temperature for a random copolymer of the same composition and having an ethylene mole fraction of $P_{AB}$. $T_{AB}$ can be calculated from the following equation:

$$Ln\ P_{AB} = \alpha/T_{AB} + \beta$$

where α and β are two constants which can be determined by calibration using a number of known random ethylene copolymers. It should be noted that α and β may vary from instrument to instrument. Moreover, one would need to create their own calibration curve with the polymer composition of interest and also in a similar molecular weight range as the fractions. There is a slight molecular weight effect. If the calibration curve is obtained from similar molecular weight ranges, such effect would be essentially negligible. In some embodiments, random ethylene copolymers satisfy the following relationship:

$$Ln\ P = -237.83/T_{ATREF} + 0.639$$

$T_{XO}$ is the ATREF temperature for a random copolymer of the same composition and having an ethylene mole fraction of $P_X$. $T_{XO}$ can be calculated from $LnP_X=\alpha/T_{XO}+\beta$. Conversely, $P_{XO}$ is the ethylene mole fraction for a random copolymer of the same composition and having an ATREF temperature of $T_X$, which can be calculated from $Ln\ P_{XO}=\alpha/T_X+\beta$.

Once the block index (BI) for each preparative TREF fraction is obtained, the weight average block index, ABI, for the whole polymer can be calculated. In some embodiments, ABI is greater than zero but less than 0.3 or from 0.1 to 0.3. In other embodiments, ABI is greater than 0.3 and up to 1.0. Preferably, ABI should be in the range of from 0.4 to 0.7, from 0.5 to 0.7, or from 0.6 to 0.9. In some embodiments, ABI is in the range of from 0.3 to 0.9, from 0.3 to 0.8, or from 0.3 to 0.7, from 0.3 to 0.6, from 0.3 to 0.5, or from 0.3 to 0.4. In other embodiments, ABI is in the range of from 0.4 to 1.0, from 0.5 to 1.0, or from 0.6 to 1.0, from 0.7 to 1.0, from 0.8 to 1.0, or from 0.9 to 1.0.

Another characteristic of the inventive ethylene/α-olefin interpolymer is that the inventive ethylene/α-olefin interpolymer comprises at least one polymer fraction which can be obtained by preparative TREF, wherein the fraction has a block index greater than 0.1 and up to 1.0 and a molecular weight distribution, $M_w/M_n$, greater than 1.3. In some embodiments, the polymer fraction has a block index greater than 0.6 and up to 1.0, greater than 0.7 and up to 1.0, greater than 0.8 and up to 1.0, or greater than 0.9 and up to 1.0. In other embodiments, the polymer fraction has a block index greater than 0.1 and up to 1.0, greater than 0.2 and up to 1.0, greater than 0.3 and up to 1.0, greater than 0.4 and up to 1.0, or greater than 0.4 and up to 1.0. In still other embodiments, the polymer fraction has a block index greater than 0.1 and up to 0.5, greater than 0.2 and up to 0.5, greater than 0.3 and up to 0.5, or greater than 0.4 and up to 0.5. In yet other embodiments, the polymer fraction has a block index greater than 0.2 and up to 0.9, greater than 0.3 and up to 0.8, greater than 0.4 and up to 0.7, or greater than 0.5 and up to 0.6.

For copolymers of ethylene and an α-olefin, the inventive polymers preferably possess (1) a PDI of at least 1.3, more preferably at least 1.5, at least 1.7, or at least 2.0, up to a maximum value of 5.0, more preferably up to a maximum of

3.5, and especially up to a maximum of 2.7; (2) a heat of fusion of 80 J/g or less; (3) an ethylene content of at least 50 weight percent; (4) a glass transition temperature, $T_g$, of less than -25° C., more preferably less than -30° C., and/or (5) one and only one $T_m$.

Further, the inventive polymers can have, alone or in combination with any other properties disclosed herein, a storage modulus, G', such that log (G') is greater than or equal to 400 kPa, preferably greater than or equal to 1.0 MPa, at a temperature of 100° C.

The inventive interpolymers may be further characterized by a thermomechanical analysis penetration depth of 1 mm at a temperature of at least 90° C. as well as a flexural modulus of from 20 MPa (3 kpsi) to 90 MPa (13 kpsi). Alternatively, the inventive interpolymers can have a thermomechanical analysis penetration depth of 1 mm at a temperature of at least 104° C. as well as a flexural modulus of at least 20 MPa (3 kpsi). They may be characterized as having an abrasion resistance (or volume loss) of less than 90 $mm^3$.

The ethylene/α-olefin interpolymers of the present disclosure have a whole polymer density, as measured by ASTM D-792, of from 0.877 g/cc to 0.895 g/cc (e.g., from 0.877 g/cc to 0.889 g/cc or from 0.879 g/cc to 0.887 g/cc).

Additionally, the ethylene/α-olefin interpolymers can have a melt index, $I_2$, (ASTM D-1238 at 190°C, 2.16 kg) of from 0.01 to 2000 dg/minute, preferably from 0.01 to 1000 dg/minute, more preferably from 0.01 to 500 dg/minute, and especially from 0.01 to 100 dg/minute. In certain embodiments, the ethylene/α-olefin interpolymers have a melt index, $I_2$, of from 0.01 to 10 dg/minute, from 0.3 to 50 dg/minute, from 0.3 to 30 dg/minute, from 0.3 to 6 dg/minute, from 0.5 to 3.5 dg/minute, from 0.8 to 2 dg/min or from 0.3 to 10 dg/minute. In further embodiments, the ethylene/α-olefin interpolymers can have a melt index, $I_{10}$, (ASTM D-1238 at 190°C, 2.16 kg) of from 0.01 to 2000 dg/minute, preferably from 0.01 to 1000 dg/minute, more preferably from 0.01 to 500 dg/minute, and especially from 0.01 to 100 dg/minute. In certain embodiments, the ethylene/α-olefin interpolymers have a melt index, $I_{10}$, of from 0.01 to 10 dg/minute, from 0.5 to 50 dg/minute, from 1 to 30 dg/minute, from 1 to 10 dg/minute or from 0.3 to 10 dg/minute.

In certain embodiments, the ethylene/α-olefin interpolymers of the present disclosure can have molecular weights, $M_w$, of from 1,000 g/mole to 5,000,000 g/mole, preferably from 1,000 g/mole to 1,000,000, more preferably from 10,000 g/mole to 500,000 g/mole, and especially from 10,000 g/mole to 300,000 g/mole. In further embodiments, the ethylene/α-olefin interpolymers of the present disclosure can have a Mw/Mn (MWD) of 5.0 or less, 4.0 or less, 3.0 or less, from 2.0 to 4.0, from 2.0 to 3.0, and/or from 2.0 to less than 3.0.

In further embodiments, the ethylene/α-olefin interpolymers of the present disclosure can have a melting temperature (Tm) of from 100°C to 170°C, a Tc of less than 110°C, and a heat of fusion of greater than 40 J/g.

The process of making the polymers has been disclosed in the following patent applications: U.S. Provisional Application No. 60/553,906, filed Mar. 17, 2004; U.S. Provisional Application No. 60/662,937, filed Mar. 17, 2005; U.S. Provisional Application No. 60/662,939, filed Mar. 17, 2005; U.S. Provisional Application No. 60/5662938, filed Mar. 17, 2005; PCT Application No. PCT/US2005/008916, filed Mar. 17, 2005; PCT Application No. PCT/US2005/008915, filed Mar. 17, 2005; and PCT Application No. PCT/US2005/008917, filed Mar. 17, 2005. For example, one such method comprises contacting ethylene and optionally one or more addition polymerizable monomers other than ethylene under addition polymerization conditions with a catalyst composition comprising:

a. the admixture or reaction product resulting from combining:
b. (A) a first olefin polymerization catalyst having a high comonomer incorporation index,
c. (B) a second olefin polymerization catalyst having a comonomer incorporation index less than 90 percent, preferably less than 50 percent, most preferably less than 5 percent of the comonomer incorporation index of catalyst (A), and
d. (C) a chain shuttling agent.

Representative catalysts and chain shuttling agent are as follows.

Catalyst (A1) is [N-(2,6-di(1-methylethyl)phenyl)amido)(2-isopropylphenyl)(α-naphthalen-2-diyl(6-pyridin-2-diyl)methane) hafnium dimethyl, prepared according to the teachings of WO 03/40195, U.S. 2003/0204017, U.S. Ser. No. 10/429,024, filed May 2, 2003, and WO 04/24740.

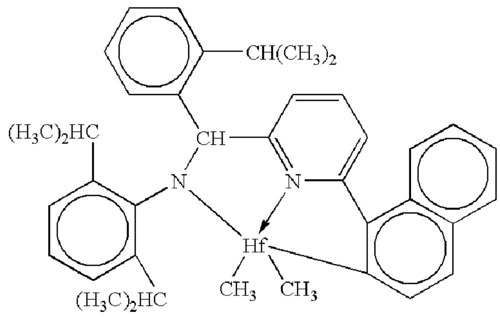

Catalyst (A2) is [N-(2,6-di(1-methylethyl)phenyl)amido)(2-methylphenyl)(1,2-phenylene-(6-pyridin-2-diyl) methane)]hafnium dimethyl, prepared according to the teachings of WO 03/40195, 2003US0204017, U.S. Ser. No. 10/429,024, filed May 2, 2003, and WO 04/24740.

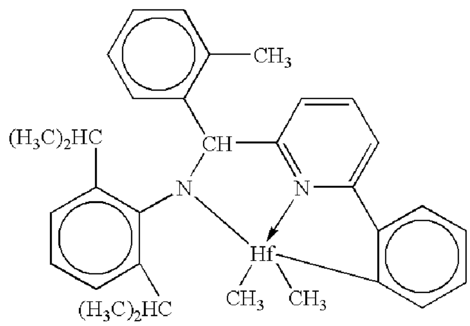

Catalyst (A3) is bis[N,N'"-(2,4,6-tri(methylphenyl)amido)ethylenediamine]hafnium dibenzyl.

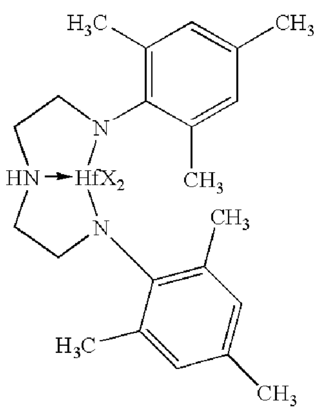

X = $CH_2C_6H_5$

Catalyst (A4) is bis((2-oxoyl-3-(dibenzo-1H-pyrrole-1-yl)-5-(methyl)phenyl)-2-phenoxymethyl)cyclohexane-1,2-diyl zirconium (IV) dibenzyl, prepared substantially according to the teachings of U.S. 2004/0010103.

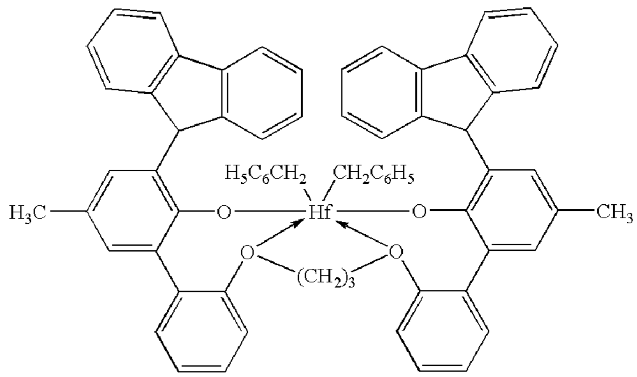

Catalyst (B1) is 1,2-bis-(3,5-di-t-butylphenylene)(1-(N-(1-methylethyl)immino)methyl)(2-oxoyl)zirconium dibenzyl.

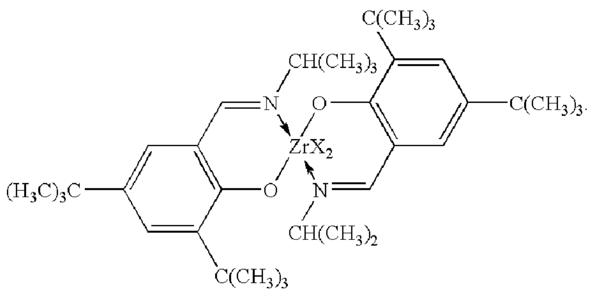

X = $CH_2C_6H_5$

Catalyst (B2) is 1,2-bis-(3,5-di-t-butylphenylene)(1-(N-(2-methylcyclohexyl)-immino)methyl)(2-oxoyl)zirconium dibenzyl

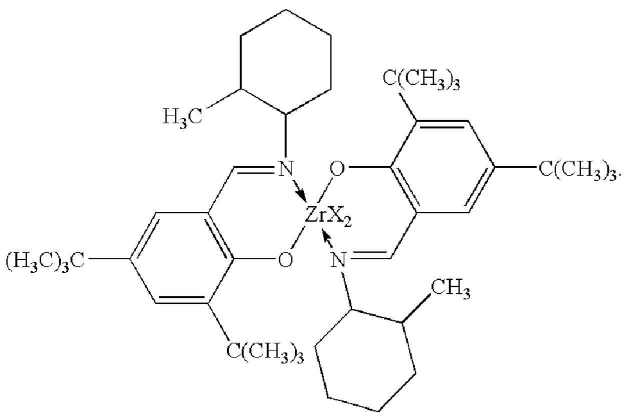

X = $CH_2C_6H_5$

Catalyst (C1) is (t-butylamido)dimethyl(3-N-pyrrolyl-1,2,3,3a,7a-η-inden-1-yl)silanetitanium dimethyl prepared substantially according to the techniques of U.S. Pat. No. 6,268,444:

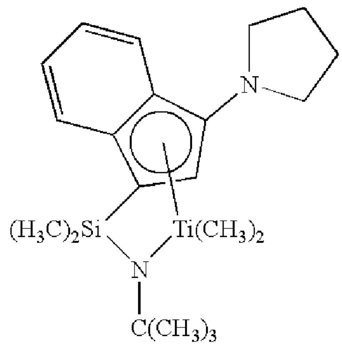

Catalyst (C2) is (t-butylamido)di(4-methylphenyl)(2-methyl-1,2,3,3a,7a-η-inden-1-yl)silanetitanium dimethyl prepared substantially according to the teachings of US-A-2003/004286:

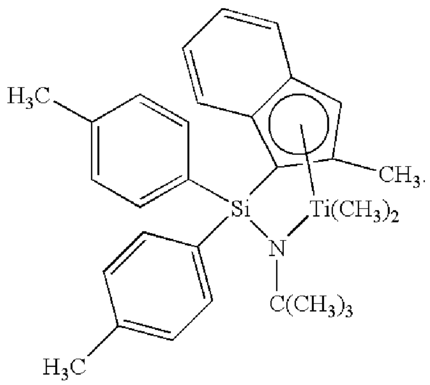

Catalyst (C3) is (t-butylamido)di(4-methylphenyl)(2-methyl-1,2,3,3a,8a-η-s-indacen-1-yl)silanetitanium dimethyl prepared substantially according to the teachings of US-A-2003/004286:

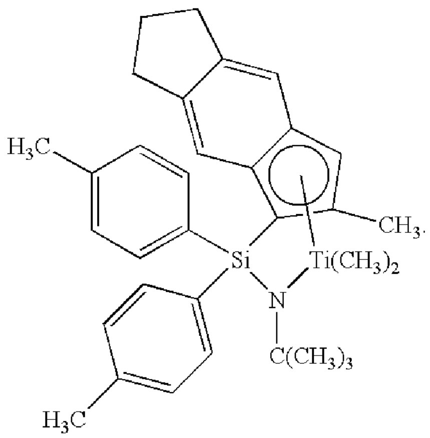

Catalyst (D1) is bis(dimethyldisiloxane)(indene-1-yl)zirconium dichloride available from Sigma-Aldrich:

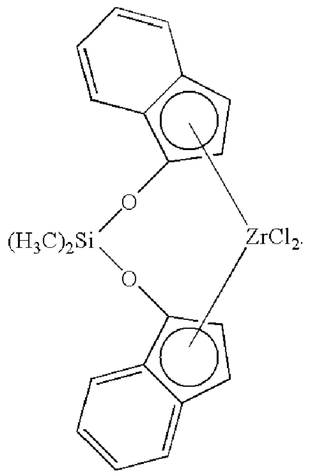

Shuttling Agents: The shuttling agents employed include diethylzinc, di(i-butyl)zinc, di(n-hexyl)zinc, triethylaluminum, trioctylaluminum, triethylgallium, i-butylaluminum bis(dimethyl(t-butyl)siloxane), i-butylaluminum bis(di(trimethylsilyl)amide), n-octylaluminum di(pyridine-2-methoxide), bis(n-octadecyl)i-butylaluminum, i-butylaluminum bis(di(n-pentyl)amide), n-octylaluminum bis(2,6-di-t-butylphenoxide, n-octylaluminum di(ethyl(1-naphthyl)amide), ethylaluminum bis(t-butyldimethylsiloxide), ethylaluminum di(bis(trimethylsilyl)amide), ethylaluminum bis(2,3,6,7-dibenzo-1-azacycloheptaneamide), n-octylaluminum bis(2,3,6,7-dibenzo-1-azacycloheptaneamide), n-octylaluminum bis(dimethyl(t-butyl)siloxide, ethylzinc (2,6-diphenylphenoxide), and ethylzinc (t-butoxide).

Preferably, the foregoing process takes the form of a continuous solution process for forming block copolymers, especially multi-block copolymers, preferably linear multi-block copolymers of two or more monomers, more especially ethylene and a $C_{3-20}$ olefin or cycloolefin, and most especially ethylene and a $C_{4-20}$ $\alpha$-olefin, using multiple catalysts that are incapable of interconversion. That is, the catalysts are chemically distinct. Under continuous solution polymerization conditions, the process is ideally suited for polymerization of mixtures of monomers at high monomer conversions. Under these polymerization conditions, shuttling from the chain shuttling agent to the catalyst becomes advantaged compared to chain growth, and multi-block copolymers, especially linear multi-block copolymers are formed in high efficiency.

The inventive interpolymers may be differentiated from conventional, random copolymers, physical blends of polymers, and block copolymers prepared via sequential monomer addition, fluxional catalysts, anionic or cationic living polymerization techniques. In particular, compared to a random copolymer of the same monomers and monomer content at equivalent crystallinity or modulus, the inventive interpolymers have better (higher) heat resistance as measured by melting point, higher TMA penetration temperature, higher high-temperature tensile strength, and/or higher high-temperature torsion storage modulus as determined by dynamic mechanical analysis. Compared to a random copolymer containing the same monomers and monomer content, the inventive interpolymers have lower compression set, particularly at elevated temperatures, lower stress relaxation, higher creep resistance, higher tear strength, higher blocking resistance, faster setup due to higher crystallization (solidification) temperature, higher recovery (particularly at elevated temperatures), better abrasion resistance, higher retractive force, and better oil and filler acceptance.

The inventive interpolymers also exhibit a unique crystallization and branching distribution relationship. That is, the inventive interpolymers have a relatively large difference between the tallest peak temperature measured using CRYSTAF and DSC as a function of heat of fusion, especially as compared to random copolymers containing the same monomers and monomer level or physical blends of polymers, such as a blend of a high density polymer and a lower density copolymer, at equivalent overall density. It is believed that this unique feature of the inventive interpolymers is due to the unique distribution of the comonomer in blocks within the polymer backbone. In particular, the inventive interpolymers may comprise alternating blocks of differing comonomer content (including homopolymer blocks). The inventive interpolymers may also comprise a distribution in number and/or block size of polymer blocks of differing density or comonomer content, which is a Schultz-Flory type of distribution. In addition, the inventive interpolymers also have a unique peak melting point and crystallization temperature profile that is substantially independent of polymer density, modulus, and morphology. In a preferred embodiment, the microcrystalline order of the polymers demonstrates characteristic spherulites and lamellae that are distinguishable from random or block copolymers, even at PDI values that are less than 1.7, or even less than 1.5, down to less than 1.3.

Moreover, the inventive interpolymers may be prepared using techniques to influence the degree or level of blockiness. That is the amount of comonomer and length of each polymer block or segment can be altered by controlling the ratio and type of catalysts and shuttling agent as well as the temperature of the polymerization, and other polymerization variables. A surprising benefit of this phenomenon is the discovery that as the degree of blockiness is increased, the optical properties, tear strength, and high temperature recovery properties of the resulting polymer are

improved. In particular, haze decreases while clarity, tear strength, and high temperature recovery properties increase as the average number of blocks in the polymer increases. By selecting shuttling agents and catalyst combinations having the desired chain transferring ability (high rates of shuttling with low levels of chain termination) other forms of polymer termination are effectively suppressed. Accordingly, little if any β-hydride elimination is observed in the polymerization of ethylene/α-olefin comonomer mixtures according to embodiments of the invention, and the resulting crystalline blocks are highly, or substantially completely, linear, possessing little or no long chain branching.

Polymers with highly crystalline chain ends can be selectively prepared in accordance with embodiments of the invention. In elastomer applications, reducing the relative quantity of polymer that terminates with an amorphous block reduces the intermolecular dilutive effect on crystalline regions. This result can be obtained by choosing chain shuttling agents and catalysts having an appropriate response to hydrogen or other chain terminating agents. Specifically, if the catalyst which produces highly crystalline polymer is more susceptible to chain termination (such as by use of hydrogen) than the catalyst responsible for producing the less crystalline polymer segment (such as through higher comonomer incorporation, regio-error, or atactic polymer formation), then the highly crystalline polymer segments will preferentially populate the terminal portions of the polymer. Not only are the resulting terminated groups crystalline, but upon termination, the highly crystalline polymer forming catalyst site is once again available for reinitiation of polymer formation. The initially formed polymer is therefore another highly crystalline polymer segment. Accordingly, both ends of the resulting multi-block copolymer are preferentially highly crystalline.

The ethylene α-olefin interpolymers used in the embodiments of the invention are preferably interpolymers of ethylene with at least one $C_3$-$C_{20}$ α-olefin. Copolymers of ethylene and a $C_3$-$C_{20}$ α-olefin are especially preferred. The interpolymers may further comprise $C_4$-$C_{18}$ diolefin and/or alkenylbenzene. Suitable unsaturated comonomers useful for polymerizing with ethylene include, for example, ethylenically unsaturated monomers, polyenes, alkenylbenzenes, etc. Examples of such comonomers include $C_3$-$C_{20}$ α-olefins such as propylene, isobutylene, 1-butene, 1-hexene, 1-pentene, 4-methyl-1-pentene, 1-heptene, 1-octene, 1-nonene, 1-decene, and the like. 1-Butene and 1-octene are especially preferred. Other suitable monomers include styrene, halo- or alkyl-substituted styrenes, vinylbenzocyclobutane, and naphthenics (e.g., cyclopentene, cyclohexene and cyclooctene).

While ethylene/α-olefin interpolymers are preferred polymers, other ethylene/olefin polymers may also be used. Olefins as used herein refer to a family of unsaturated hydrocarbon-based compounds with at least one carbon-carbon double bond. Depending on the selection of catalysts, any olefin may be used in embodiments of the invention. Preferably, suitable olefins are $C_3$-$C_{20}$ aliphatic and aromatic compounds containing vinylic unsaturation, as well as cyclic compounds, such as cyclobutene, and cyclopentene. Also included are mixtures of such olefins as well as mixtures of such olefins with $C_4$-$C_{40}$ diolefin compounds.

Examples of olefin monomers include, but are not limited to propylene, isobutylene, 1-butene, 1-pentene, 1-hexene, 1-heptene, 1-octene, 1-nonene, 1-decene, and 1-dodecene, 1-tetradecene, 1-hexadecene, 1-octadecene, 1-eicosene, 3-methyl-1-butene, 3-methyl-1-pentene, 4-methyl-1-pentene, 4,6-dimethyl-1-heptene, 4-vinylcyclohexene, vinylcyclohexane, cyclopentene, cyclohexene, cyclooctene, other $C_4$-$C_{40}$ α-olefins, and the like. In certain embodiments, the α-olefin is propylene, 1-butene, 1-pentene, 1-hexene, 1-octene or a combination thereof. Although any hydrocarbon containing a vinyl group potentially may be used in embodiments of the invention, practical issues such as monomer availability, cost, and the ability to conveniently remove unreacted monomer from the resulting polymer may become more problematic as the molecular weight of the monomer becomes too high.

The polymerization processes described herein are well suited for the production of olefin polymers comprising monovinylidene aromatic monomers including styrene, o-methyl styrene, p-methyl styrene, t-butylstyrene, and the like. In particular, interpolymers comprising ethylene and styrene can be prepared by following the teachings herein. Optionally, copolymers comprising ethylene, styrene and a $C_3$-$C_{20}$ alpha olefin having improved properties can be prepared.

One class of desirable polymers that can be made in accordance with embodiments of the invention are elastomeric interpolymers of ethylene, a $C_3$-$C_{20}$ α-olefin, especially propylene. Preferred α-olefins for use in this embodiment of the present invention are designated by the formula $CH_2$=CHR*, where R* is a linear or branched alkyl group of from 1 to 12 carbon atoms. Examples of suitable α-olefins include, but are not limited to, propylene, isobutylene, 1-butene, 1-pentene, 1-hexene, 4-methyl-1-pentene, and 1-octene. A particularly preferred α-olefin is propylene. The propylene based polymers are generally referred to in the art as EP or EPDM polymers.

In some embodiments, the inventive interpolymers made with two catalysts incorporating differing quantities of comonomer have a weight ratio of blocks formed thereby from 95:5 to 5:95. Preferred polymers are high molecular weight polymers, having a weight average molecular weight (Mw) from 10,000 to 2,500,000, preferably from 20,000 to 500,000, more preferably from 20,000 to 350,000, and a polydispersity less than 3.5, more preferably less than 3.0, and a Mooney viscosity (ML (1+4) 125° C.) from 1 to 250.

The ethylene/α-olefin interpolymers can be functionalized by incorporating at least one functional group in its polymer structure. Exemplary functional groups may include, for example, ethylenically unsaturated mono- and di-functional carboxylic acids, ethylenically unsaturated mono- and di-functional carboxylic acid anhydrides, salts thereof and esters thereof. Such functional groups may be grafted to an ethylene/α-olefin interpolymer, or it may be copolymerized

with ethylene and an optional additional comonomer to form an interpolymer of ethylene, the functional comonomer and optionally other comonomer(s). Means for grafting functional groups onto polyethylene are described for example in U.S. Pat. Nos. 4,762,890, 4,927,888, and 4,950,541. One particularly useful functional group is malic anhydride.

The amount of the functional group present in the functional interpolymer can vary. The functional group can typically be present in a copolymer-type functionalized interpolymer in an amount of at least 1.0 weight percent, preferably at least 5 weight percent, and more preferably at least 7 weight percent. The functional group will typically be present in a copolymer-type functionalized interpolymer in an amount less than 40 weight percent, preferably less than 30 weight percent, and more preferably less than 25 weight percent.

Preparation of Foams

The foams disclosed herein can be prepared from a foamable composition comprising at least one blowing agent, at least one cross-linking agent and at least one ethylene/α-olefin interpolymer disclosed herein. Optionally, the foamable composition may further comprise at least a second polymer component, at least one other additive or a combination thereof. Non-limiting examples of suitable other additives include grafting initiators, cross-linking catalysts, blowing agent activators (e.g., zinc oxide, zinc stearate and the like), coagents (e.g., triallyl cyanurate), plasticizers, colorants or pigments, stability control agents, nucleating agents, fillers, antioxidants, acid scavengers, ultraviolet stabilizers, flame retardants, lubricants, processing aids, extrusion aids, and combinations thereof.

In certain embodiments, the ethylene/α-olefin interpolymer comprises the majority phase of the foamable composition, e.g., at least 50 wt% of the foamable composition.

The foams disclosed herein may take any physical forms known in the art, such as sphere, cylinder, disk, cube, prism, sheet, plank, foam slab stock or irregular shapes. Further, they can be injection molded articles, compression molded articles, or extruded articles. Other useful forms are expandable or foamable particles, moldable foam particles, or beads, and articles formed by expansion and/or coalescing and welding of those particles.

In some footwear applications such as inner soles, midsoles, outer soles, unisoles, and sole inserts, the foams disclosed herein can be substantially cross-linked. A foam is substantially cross-linked when the foam contains more than 5% of gel per ASTM D-2765-84 Method A. In some embodiments, the foam disclosed herein contains more than 5% of gel, more than 10% of gel, more than 15% of gel, more than 20% of gel, more than 25% of gel, more than 30% of gel, more than 35% of gel, or more than 40% of gel per ASTM D-2765-84 Method A. In other embodiments, the foam disclosed herein contains less than 95% of gel. In further embodiments, the foam disclosed herein contains less than 85% of gel. In further embodiments, the foam disclosed herein contains less than 75% of gel.

In certain embodiments, the foam compositions of the present disclosure have a density, as measured by ASTM D-792, of from 0.10 g/cc to 0.50 g/cc.

The foams or foamable compositions disclosed herein can be either closedcelled or open-celled. Disclosed herein, a foam is a closed cell foam when the foam contains 80% or more closed cells or less than 20% open cells according to ASTM D2856-A. In some embodiments, the foams disclosed herein can have less than 1% open cells, less than 10% open cells, less than 20% open cells, less than 30% open cells, less than 40% open cells, less than 50% open cells, less than 60% open cells, less than 10% open cells, less than 70% open cells, less than 80% open cells or less than 90% open cells. In other embodiments, the foams disclosed herein can have between 10% and 90% open cells, between 10% and 50% open cells, between 50% and 90% open cells, or between 10% and 30% open cells.

In some embodiments, the foamable composition comprises the ethylene/α-olefin interpolymer disclosed herein. In other embodiments, the foamable composition comprises a polymer blend (hereinafter "polymer blend") comprising the ethylene/α-olefin interpolymer and a second polymer component. Some non-limiting examples of the second polymer component include ethylene/α-olefin random copolymer, EVA, polyolefins (e.g., polyethylene and polypropylene), foamable polymers (e.g., polystyrene, ABS, SBS and the like) and combinations thereof. In some embodiments, the second polymer component is ethylene/α-olefin random copolymer, EVA, polyethylene, polypropylene, polystyrene, ABS, SBS or a combination thereof. The second polymer component may be blended with the ethylene/α-olefin interpolymer before it is added to the foamable composition. In some embodiments, the second polymer component is added directly to the foamable composition without pre-blending with the ethylene/α-olefin interpolymer.

The weight ratio of the ethylene/α-olefin interpolymer to the second polymer component in the polymer blend can be between 1:99 and 99:1, between 1:50 and 50:1, between 1:25 and 25:1, between 1:10 and 10:1, between 1:9 and 9:1, between 1:8 and 8:1, between 1:7 and 7:1, between 1:6 and 6:1, between 1:5 and 5:1, between 1:4 and 4:1, between 1:3 and 3:1, between 1:2 and 2:1, between 3:7 and 7:3 or between 2:3 and 3:2.

In some embodiments, the second polymer component is a polyolefin. Any polyolefin that is partially or totally compatible with the ethylene/α-olefin interpolymer may be used. Non-limiting examples of suitable polyolefins include polyethylenes; polypropylenes; polybutylenes (e.g., polybutene-1); polypentene-1; polyhexene-1; polyoctene-1; polydecene-1; poly-3-methylbutene-1; poly-4-methylpentene-1; polyisoprene; polybutadiene; poly-1,5-hexadiene; interpolymers derived from olefins; interpolymers derived from olefins and other polymers such as polyvinyl chloride, polystyrene,

polyurethane, and the like; and mixtures thereof. In some embodiments, the polyolefin is a homopolymer such as polyethylene, polypropylene, polybutylene, polypentene-1, poly-3-methylbutene-1, poly-4-methylpentene-1, polyisoprene, polybutadiene, poly-1,5-hexadiene, polyhexene-1, polyoctene-1 and polydecene-1.

Some non-limiting examples of suitable polyethylenes include ultra low density polyethylene (ULDPE), linear low density polyethylene (LLDPE), low density polyethylene (LDPE), medium density polyethylene (MDPE), high density polyethylene (HDPE), high molecular weight high density polyethylene (HMW-HDPE), ultra high molecular weight polyethylene (UHMW-PE) and combinations thereof. Some non-limiting examples of polypropylenes include low density polypropylene (LDPP), high density polypropylene (HDPP), high-melt strength polypropylene (HMS-PP) and combination thereof. In some embodiments, the second polymer component is or comprises high-melt-strength polypropylene (HMS-PP), low density polyethylene (LDPE) or a combination thereof.

In certain embodiments, the foam compositions of the present invention can be physically blown or chemically blown foams. The blowing agents suitable for making the foams disclosed herein can include, but are not limited to, inorganic blowing agents, organic blowing agents, chemical blowing agents and combinations thereof. Some blowing agents are disclosed in Sendijarevic et al., "Polymeric Foams And Foam Technology," Hanser Gardner Publications, Cincinnati, Ohio, 2nd edition, Chapter 18, pages 505-547 (2004).

Non-limiting examples of suitable inorganic blowing agents include carbon dioxide, nitrogen, argon, water, air, nitrogen, and helium. Non-limiting examples of suitable organic blowing agents include aliphatic hydrocarbons having 1-6 carbon atoms, aliphatic alcohols having 1-3 carbon atoms, and fully and partially halogenated aliphatic hydrocarbons having 1-4 carbon atoms. Non-limiting examples of suitable aliphatic hydrocarbons include methane, ethane, propane, n-butane, isobutane, n-pentane, isopentane, neopentane, and the like. Non-limiting examples of suitable aliphatic alcohols include methanol, ethanol, n-propanol, and isopropanol. Non-limiting examples of suitable fully and partially halogenated aliphatic hydrocarbons include fluorocarbons, chlorocarbons, and chlorofluorocarbons. Non-limiting examples of suitable fluorocarbons include methyl fluoride, perfluoromethane, ethyl fluoride, 1,1-difluoroethane (HFC-152a), 1,1,1-trifluoroethane (HFC-143a), 1,1,1,2-tetrafluoroethane (HFC-134a), pentafluoroethane, difluoromethane, perfluoroethane, 2,2-difluoropropane, 1,1,1-trifluoropropane, perfluoropropane, dichloropropane, difluoropropane, perfluorobutane, perfluorocyclobutane. Non-limiting examples of suitable partially halogenated chlorocarbons and chlorofluorocarbons include methyl chloride, methylene chloride, ethyl chloride, 1,1,1-trichloroethane, 1,1-dichloro-1-fluoroethane (HCFC-141b), 1-chloro-1,1difluoroethane (HCFC-142b), 1,1-dichloro-2,2,2-trifluoroethane (HCFC-123) and 1-chloro-1,2,2,2-tetrafluoroethane(HCFC-124). Non-limiting examples of suitable fully halogenated chlorofluorocarbons include trichloromonofluoromethane (CFC-11), dichlorodifluoromethane (CFC-12), trichlorotrifluoroethane (CFC-113), 1,1,1-trifluoroethane, pentafluoroethane, dichlorotetrafluoroethane (CFC-114), chloroheptafluoropropane, and dichlorohexafluoropropane. Non-limiting examples of suitable chemical blowing agents include azodicarbonamide, azodiisobutyro-nitrile, benezenesulfonhydrazide, 4,4-oxybenzene sulfonyl-semicarbazide, p-toluene sulfonyl semi-carbazide, barium azodicarboxylate, N,N'-dimethyl-N,N'-dinitrosoterephthalamide, and trihydrazino triazine. In some embodiments, the blowing agent is azodicarbonamide isobutane, $CO_2$, or a mixture of thereof.

The amount of the blowing agent in the foamable composition disclosed herein may be from 0.1 to 20 wt %, from 0.1 to 10 wt %, or from 0.1 to 5 wt %, based on the weight of the ethylene/$\alpha$-olefin interpolymer or the polymer blend.

The foams disclosed herein can be perforated to enhance or accelerate permeation of the blowing agent from the foam cells and/or air into the foam cells. In some embodiments, the foams are perforated to form channels which extend entirely through the foam from one surface to another or partially through the foam. The channels can be spaced up to 2.5 centimeters or up to 1.3 centimeters apart. The channels can be present over substantially an entire surface of the foam and preferably are uniformly dispersed over the surface. In other embodiments, the foams can employ a stability control agent of the type described below in combination with perforation to allow accelerated permeation or release of the blowing agent while maintaining a dimensionally stable foam. The teachings of foam perforation are disclosed in U.S. Pat. Nos. 5,424,016 and 5,585,058.

The foamable compositions disclosed herein comprise a cross-linking agent. Any cross-linking agent that can cross-link the ethylene/$\alpha$-olefin interpolymer or the polymer blend disclosed herein can be used. The cross-linking agent can be incorporated into the ethylene/$\alpha$-olefin interpolymer or the polymer blend in the same manner as the blowing agent. The amount of the cross-linking agent in the foamable compositions or foams can be from greater than 0 to 10 wt %, from 0.1 to 7.5 wt %, or from 1 to 5 wt % based on the weight of the ethylene/$\alpha$-olefin interpolymer or the polymer blend.

When a cross-linking agent is used, the cross-linking of the foams can be induced by activating the cross-linking agent in the foamable composition. The cross-linking agent can be activated by exposing it to a temperature above its decomposition temperature. Alternatively, the cross-linking agent can be activated by exposing it to a radiation that causes the generation of free radicals from the cross-linking agent. Such radiation can include, for example, radio frequency activation where radio frequency interacts with an additive that causes the material to heat quickly and can initiate the cross-linking reaction. Similarly, the foaming or expansion of the foams disclosed herein can be induced by activating the blowing agent in the foamable composition. In some embodiments, the blowing agent is activated by exposing it to a temperature above its activation temperature. Generally, the activations of the cross-linking and foaming can occur either

simultaneously or sequentially. In some embodiments, the activations occur simultaneously. In other embodiments, the activation of the cross-linking occurs first and the activation of the foaming occurs next. In further embodiments, the activation of the foaming occurs first and the activation of the cross-linking occurs next.

The foamable composition can be prepared or processed at a temperature of less than 150° C. to prevent the decomposition of the blowing agent and the cross-linking agent. When radiation cross-linking is used, the foamable composition can be prepared or processed at a temperature of less than 160° C. to prevent the decomposition of the blowing agent. In some embodiments, the foamable composition can be extruded or processed through a die of desired shape to form a foamable structure. Next, the foamable structure can be expanded and cross-linked at an elevated temperature (e.g., from 150° C. to 250° C.) to activate the blowing agent and the cross-linking agent to form a foam structure. In some embodiments, the foamable structure can be irradiated to cross-link the polymer material, which can then be expanded at the elevated temperature as described above.

Some suitable cross-linking agents have been disclosed in Zweifel Hans et al., "Plastics Additives Handbook," Hanser Gardner Publications, Cincinnati, Ohio, 5th edition, Chapter 14, pages 725-812 (2001); Encyclopedia of Chemical Technology, Vol. 17, 2nd edition, Interscience Publishers (1968); and Daniel Seem, "Organic Peroxides," Vol. 1, Wiley-Interscience, (1970). In some embodiments, there is no cross-linking agent in the foamable compositions or foams disclosed herein.

Non-limiting examples of suitable cross-linking agents include peroxides, phenols, azides, aldehyde-amine reaction products, substituted ureas, substituted guanidines; substituted xanthates; substituted dithiocarbamates; sulfur-containing compounds, such as thiazoles, sulfenamides, thiuramidisulfides, paraquinonedioxime, dibenzoparaquinonedioxime, sulfur; imidazoles; silanes and combinations thereof.

Non-limiting examples of suitable organic peroxide cross-linking agents include alkyl peroxides, aryl peroxides, peroxyesters, peroxycarbonates, diacylperoxides, peroxyketals, cyclic peroxides and combinations thereof. In some embodiments, the organic peroxide is dicumyl peroxide, t-butylisopropylidene peroxybenzene, 1,1-di-t-butyl peroxy-3,3,5-trimethylcyclohexane, 2,5-dimethyl-2,5-di(t-butyl peroxy) hexane, t-butyl-cumyl peroxide, di-t-butyl peroxide, 2,5-dimethyl-2,5-di-(t-butyl peroxy) hexyne or a combination thereof. In one embodiment, the organic peroxide is dicumyl peroxide. Additional teachings regarding organic peroxide cross-linking agents are disclosed in C. P. Park, "Polyolefin Foam", Chapter 9 of Handbook of Polymer Foams and Technology, edited by D. Klempner and K. C. Frisch, Hanser Publishers, pp. 198-204, Munich (1991).

Non-limiting examples of suitable azide cross-linking agents include azidoformates, such as tetramethylene-bis(azidoformate); aromatic polyazides, such as 4,4'-diphenylmethane diazide; and sulfonazides, such as p,p'-oxy-bis(benzene sulfonyl azide). The disclosure of azide cross-linking agents can be found in U.S. Pat. Nos. 3,284,421 and 3,297,674.

The poly(sulfonyl azide) is any compound having at least two sulfonyl azide groups (i.e., $-SO_2N_3$) that are reactive towards the ethylene/α-olefin interpolymer disclosed herein. In some embodiments, the poly(sulfonyl azide)s have a structure of X-R-X wherein each X is $-SO_2N_3$ and R represents an unsubstituted or inertly substituted hydrocarbyl, hydrocarbyl ether or silicon-containing group. In some embodiments, the R group has sufficient carbon, oxygen or silicon, preferably carbon, atoms to separate the sulfonyl azide groups sufficiently to permit a facile reaction between the ethylene/α-olefin interpolymer and the sulfonyl azide groups. In other embodiments, the R group has at least 1, at least 2, or at least 3 carbon, oxygen or silicon, preferably carbon, atoms between the sulfonyl azide groups. The term "inertly substituted" refers to substitution with atoms or groups which do not undesirably interfere with the desired reaction(s) or desired properties of the resulting cross-linked polymers. Such groups include fluorine, aliphatic or aromatic ethers, siloxanes and the like. Non-limiting examples of suitable structures of R include aryl, alkyl, alkaryl, arylalkyl, silanyl, heterocyclyl, and other inert groups. In some embodiments, the R group includes at least one aryl group between the sulfonyl groups. In other embodiments, the R group includes at least two aryl groups (such as when R is 4,4' diphenylether or 4,4'-biphenyl). When R is one aryl group, it is preferred that the group have more than one ring, as in the case of naphthylene bis(sulfonyl azides). In some embodiments, the poly(sulfonyl)azides include 1,5-pentane bis(sulfonylazide), 1,8-octane bis(sulfonyl azide), 1,10-decane bis(sulfonyl azide), 1,10-octadecane bis(sulfonyl azide), 1-octyl-2,4,6-benzene tris(sulfonyl azide), 4,4'-diphenyl ether bis(sulfonyl azide), 1,6-bis(4'-sulfonazidophenyl)hexane, 2,7-naphthalene bis(sulfonyl azide), and mixed sulfonyl azides of chlorinated aliphatic hydrocarbons containing an average of from 1 to 8 chlorine atoms and from 2 to 5 sulfonyl azide groups per molecule, and combinations thereof. In other embodiments, the poly(sulfonyl azide)s include oxy-bis(4-sulfonylazidobenzene), 2,7-naphthalene bis(sulfonyl azido), 4,4'-bis(sulfonyl azido)biphenyl, 4,4'-diphenyl ether bis(sulfonyl azide) and bis(4-sulfonyl azidophenyl)methane, and combinations thereof.

Non-limiting examples of suitable aldehyde-amine reaction products include formaldehyde-ammonia, formaldehyde-ethylchloride-ammonia, acetaldehydeammonia, formaldehyde-aniline, butyraldehyde-aniline, heptaldehyde-aniline, and combinations thereof.

Non-limiting examples of suitable substituted ureas include trimethylthiourea, diethylthiourea, dibutylthiourea, tripentylthiourea, 1,3-bis(2-benzothiazolylmercaptomethyl)urea, N,N-diphenylthiourea, and combinations thereof.

Non-limiting examples of suitable substituted guanidines include diphenylguanidine, di-o-tolylguanidine, diphenylguanidine phthalate, the di-o-tolylguanidine salt of dicatechol borate, and combinations thereof.

Non-limiting examples of suitable substituted xanthates include zinc ethylxanthate, sodium isopropylxanthate, butylxanthic disulfide, potassium isopropylxanthate, zinc butylxanthate, and combinations thereof.

Non-limiting examples of suitable dithiocarbamates include copper dimethyl-, zinc dimethyl-, tellurium diethyl-, cadmium dicyclohexyl-, lead dimethyl-, lead dimethyl-, selenium dibutyl-, zinc pentamethylene-, zinc didecyl-, zinc isopropyloctyl-dithiocarbamate, and combinations thereof.

Non-limiting examples of suitable thiazoles include 2-mercaptobenzothiazole, zinc mercaptothiazolyl mercaptide, 2-benzothiazolyl-N,N-diethylthiocarbamyl sulfide, 2,2'-dithiobis(benzothiazole), and combinations thereof.

Non-limiting examples of suitable imidazoles include 2-mercaptoimidazoline 2-mercapto-4,4,6-trimethyldihydropyrimidine, and combinations thereof.

Non-limiting examples of suitable sulfenamides include N-t-butyl-2-benzothiazole-, N-cyclohexylbenzothiazole-, N,N-diisopropylbenzothiazole-, N-(2,6-dimethylmorpholino)-2-benzothiazole-, N,N-diethylbenzothiazole-sulfenamide, and combinations thereof.

Non-limiting examples of suitable thiuramidisulfides include N,N'-diethyl-, tetrabutyl-, N,N'-diisopropyldioctyl-, tetramethyl-, N,N'-dicyclohexyl-, N,N'-tetralaurylthiuramidisulfide, and combinations thereof.

In some embodiments, the cross-linking agents are silanes. Any silane that can effectively graft to and/or cross-link the ethylene/α-olefin interpolymer or the polymer blend disclosed herein can be used. Non-limiting examples of suitable silane cross-linking agents include unsaturated silanes that comprise an ethylenically unsaturated hydrocarbyl group, such as a vinyl, allyl, isopropenyl, butenyl, cyclohexenyl or gamma-(meth)acryloxy allyl group, and a hydrolyzable group such as a hydrocarbyloxy, hydrocarbonyloxy, and hydrocarbylamino group. Non-limiting examples of suitable hydrolyzable groups include methoxy, ethoxy, formyloxy, acetoxy, proprionyloxy, alkyl and arylamino groups. In other embodiments, the silanes are the unsaturated alkoxy silanes which can be grafted onto the interpolymer. Some of these silanes and their preparation methods are more fully described in U.S. Pat. No. 5,266,627. In further embodiments, the silane cross-linking agents are vinyltrimethoxysilane, vinyltriethoxysilane, vinyltris(2-methoxyethoxy)silane, vinyltriacetoxysilane, vinylmethyldimethoxysilane, 3-methacryloyloxypropyltrimethoxysilane, and combinations thereof.

The amount of the silane cross-linking agent can vary widely, depending upon the nature of the ethylene/α-olefin interpolymer or the polymer blend, the silane employed, the processing conditions, the amount of grafting initiator, the ultimate application, and other factors. When vinyltrimethoxysilane (VTMOS) is used, the amount of VTMOS is generally at least 0.1 weight percent, at least 0.5 weight percent, or at least 1 weight percent, based on the combined weight of the silane cross-linking agent and the interpolymer or the polymer blend.

Optionally, the foamable composition disclosed herein may comprise a grafting initiator. Those skilled in the art will be readily able to select the amount of the grafting initiator based on the characteristics of the ethylene/α-olefin interpolymer or the polymer blend, such as molecular weight, molecular weight distribution, comonomer content, as well as the presence of cross-linking enhancing coagents, additives, and the like.

Optionally, the foamable composition disclosed herein may comprise a catalyst. Any cross-linking catalyst that can promote the cross-linking of the ethylene/α-olefin interpolymer or the polymer blend can be used. Non-limiting examples of suitable catalysts include organic bases, carboxylic acids, and organometallic compounds. In some embodiments, the catalyst includes organic titanates and complexes or carboxylates of lead, cobalt, iron, nickel, zinc and tin. In other embodiments, the catalyst is or comprises dibutyltin dilaurate, dioctyltin maleate, dibutyltin diacetate, dibutyltin dioctanoate, stannous acetate, stannous octanoate, lead naphthenate, zinc caprylate, cobalt naphthenate or a combination thereof. In further embodiments, the catalyst is or comprises a tin carboxylate such as dibutyltin dilaurate and dioctyltin maleate.

Alternatively, the cross-linking of the foams or foamable compositions disclosed herein can be effected by using radiation. Non-limiting examples of suitable radiation include electron beam or beta ray, gamma rays, X-rays, or neutron rays. Radiation is believed to activate the cross-linking by generating radicals in the polymer which may subsequently combine and cross-link. Additional teachings concerning radiation cross-linking are disclosed in C. P. Park, supra, pages 198-204. In some embodiments, the foam or foamable composition is not cross-linked by radiation.

Radiation dosage generally depends upon many factors. Those skilled in the art will be readily able to select suitable radiation levels based on thickness and geometry of the article to be irradiated, as well as the characteristics of the ethylene/α-olefin interpolymer or the polymer blend, such as molecular weight, molecular weight distribution, comonomer content, the presence of cross-linking enhancing coagents, additives (e.g., oil), and the like. In general, the dosage does not exceed what is required to effect the desired level of cross-linking. In some embodiments, the dosage causes more than 5% gel in the foam per ASTM D-2765-84 Method A.

In some embodiments, dual cure systems, which comprises at least two activation methods selected from cross-linking agents and radiation, can be effectively employed. For instance, it may be desirable to employ a peroxide cross-linking agent in conjunction with a silane cross-linking agent, a peroxide cross-linking agent in conjunction with radiation, a sulfur-containing cross-linking agent in conjunction with a silane cross-linking agent, or the like.

Those skilled in the art will be readily able to select the amount of cross-linking agent, based on the desired cross-linking level, the characteristics of the polymer such as molecular weight, molecular weight distribution, comonomer content, the presence of cross-linking enhancing coagents, other additives and the like. Since it is expressly contemplated that the ethylene/α-olefin interpolymer can be blended with other polymers such as EVA and polyolefins prior to cross-linking, those skilled in the art may use the disclosure herein as a reference point in optimizing the amount of the cross-linking agent for a particular polymer in question.

Optionally, the foams or foamable compositions disclosed herein can comprise at least one other additive. Any foam additive that can improve and/or control the processibility, appearance, physical, chemical, and/or mechanical properties of the foam structures or articles can be used. Non-limiting examples of suitable other additives include grafting initiators, cross-linking catalysts, blowing agent activators (e.g., zinc oxide, zinc stearate and the like), coagents (e.g., triallyl cyanurate), plasticizers, colorants or pigments, stability control agents, nucleating agents, fillers, antioxidants, acid scavengers, ultraviolet (UV) stabilizers, flame retardants, lubricants, processing aids, extrusion aids, and combinations thereof. The total amount of the other additives can range from greater than 0 to 80%, from 0.001% to 70%, from 0.01% to 60%, from 0.1% to 50%, from 1% to 40%, or from 10% to 50% of the total weight of the foam. Some suitable additives have been described in Zweifel Hans et al., "Plastics Additives Handbook," Hanser Gardner Publications, Cincinnati, Ohio, 5th edition (2001).

The foams or foamable compositions disclosed herein may optionally comprise a stability control agent or gas permeation modifier. Any stability control agent that can enhance the dimensional stability of the foams can be used. Non-limiting examples of suitable stability control agents include amides and esters of $C_{10-24}$ fatty acids. Such agents are described in U.S. Pat. Nos. 3,644,230 and 4,214,054. In some embodiments, the stability control agents include stearyl stearamide, glycerol monostearate, glycerol monobehenate, sorbitol monostearate and combinations thereof. In general, the amount of the stability control agents is from 0.1 to 10 parts, from 0.1 to 5 parts, or from 0.1 to 3 parts by weight per hundred parts by weight of the polymer. In some embodiment, the stability control agent is glycerol monostearate.

The foams or foamable compositions disclosed herein may optionally comprise a nucleating agent. Any nucleating agent that can control the size of foam cells can be used. Non-limiting examples of suitable nucleating agents include inorganic substances such as calcium carbonate, talc, clay, titanium oxide, silica, barium sulfate, diatomaceous earth, citric acid, sodium bicarbonate, sodium carbonate, and combinations thereof. In some embodiments, the nucleating agent is a combination of citric acid and sodium bicarbonate or a combination of citric acid and sodium carbonate. In other embodiments, the nucleating agent is HYDROCEROL® CF 20 from Clariant Corporation, Charlotte, N.C. The amount of nucleating agent employed can range from 0.01 to 5 parts by weight per hundred parts by weight of the polymer.

In some embodiments, the foams or foamable compositions disclosed herein comprise an antioxidant. Any antioxidant that can prevent the oxidation of polymer components and organic additives in the foams can be added to the foams disclosed herein. Non-limiting examples of suitable antioxidants include aromatic or hindered amines such as alkyl diphenylamines, phenyl-α-naphthylamine, alkyl or aralkyl substituted phenyl-α-naphthylamine, alkylated p-phenylene diamines, tetramethyldiaminodiphenylamine and the like; phenols such as 2,6-di-t-butyl-4-methylphenol; 1,3,5-trimethyl-2,4,6-tris(3',5'-di-t-butyl-4'-hydroxybenzyl)benzene; tetrakis[(methylene(3,5-di-t-butyl-4-hydroxyhydrocinnamate)]methane (e.g., IRGANOX™ 1010, from Ciba Geigy, New York); acryloyl modified phenols; octadecyl-3,5-di-t-butyl-4-hydroxycinnamate (e.g., IRGANOX™ 1076, commercially available from Ciba Geigy); phosphites and phosphonites; hydroxylamines; benzofuranone derivatives; and combinations thereof. Where used, the amount of the antioxidant in the foam can be from greater than 0 to 5 wt %, from 0.0001 to 2.5 wt %, from 0.001 to 1 wt %, or from 0.001 to 0.5 wt % of the total weight of the foam. Some antioxidants have been described in Zweifel Hans et al., "Plastics Additives Handbook," Hanser Gardner Publications, Cincinnati, Ohio, 5th edition, Chapter 1, pages 1-140 (2001).

In other embodiments, the foams or foamable compositions disclosed herein comprise a UV stabilizer. Any UV stabilizer that may prevent or reduce the degradation of the foams by UV radiations can be added to the foams disclosed herein. Non-limiting examples of suitable UV stabilizers include benzophenones, benzotriazoles, aryl esters, oxanilides, acrylic esters, formamidines, carbon black, hindered amines, nickel quenchers, hindered amines, phenolic antioxidants, metallic salts, zinc compounds and combinations thereof. Where used, the amount of the UV stabilizer in the foam can be from greater than 0 to 5 wt %, from 0.01 to 3 wt %, from 0.1 to 2 wt %, or from 0.1 to 1 wt % of the total weight of the foam. Some UV stabilizers have been described in Zweifel Hans et al., "Plastics Additives Handbook," Hanser Gardner Publications, Cincinnati, Ohio, 5th edition, Chapter 2, pages 141-426 (2001).

In further embodiments, the foams or foamable compositions disclosed herein comprise a colorant or pigment. Any colorant or pigment that can change the look of the foams to human eyes can be added to the foams disclosed herein. Non-limiting examples of suitable colorants or pigments include inorganic pigments such as metal oxides such as iron oxide, zinc oxide, and titanium dioxide, mixed metal oxides, carbon black, organic pigments such as anthraquinones, anthanthrones, azo and monoazo compounds, arylamides, benzimidazolones, BONA lakes, diketopyrrolopyrroles, dioxazines, disazo compounds, diarylide compounds, flavanthrones, indanthrones, isoindolinones, isoindolines, metal complexes, monoazo salts, naphthols, b-naphthols, naphthol AS, naphthol lakes, perylenes, perinones, phthalocyanines, pyranthrones, quinacridones, and quinophthalones, and combinations thereof. Where used, the amount of the colorant or

pigment in the foam can be from greater than 0 to 10 wt %, from 0.1 to 5 wt %, or from 0.25 to 2 wt % of the total weight of the foam. Some colorants have been described in Zweifel Hans et al., "Plastics Additives Handbook," Hanser Gardner Publications, Cincinnati, Ohio, 5th edition, Chapter 15, pages 813-882 (2001).

Optionally, the foams or foamable compositions disclosed herein can comprise a filler. Any filler which can be used to adjust, inter alia, volume, weight, costs, and/or technical performance can be added to the foams disclosed herein. Non-limiting examples of suitable fillers include talc, calcium carbonate, chalk, calcium sulfate, clay, kaolin, silica, glass, fumed silica, mica, wollastonite, feldspar, aluminum silicate, calcium silicate, alumina, hydrated alumina such as alumina trihydrate, glass microsphere, ceramic microsphere, thermoplastic microsphere, barite, wood flour, glass fibers, carbon fibers, marble dust, cement dust, magnesium oxide, magnesium hydroxide, antimony oxide, zinc oxide, barium sulfate, titanium dioxide, titanates and combinations thereof. In some embodiments, the filler is barium sulfate, talc, calcium carbonate, silica, glass, glass fiber, alumina, titanium dioxide, or a mixture thereof. In other embodiments, the filler is talc, calcium carbonate, barium sulfate, glass fiber or a mixture thereof. Where used, the amount of the filler in the foam can be from greater than 0 to 80 wt %, from 0.1 to 60 wt %, from 0.5 to 40 wt %, from 1 to 30 wt %, or from 10 to 40 wt % of the total weight of the foam. Some fillers have been disclosed in U.S. Pat. No. 6,103,803 and Zweifel Hans et al., "Plastics Additives Handbook," Hanser Gardner Publications, Cincinnati, Ohio, 5th edition, Chapter 17, pages 901-948

(2001).

Optionally, the foams or foamable compositions disclosed herein can comprise a lubricant. Any lubricant that can be used, inter alia, to modify the rheology of the molten foamable compositions, to improve the surface finish of molded foamed articles, and/or to facilitate the dispersion of fillers or pigments can be added to the foams disclosed herein. Non-limiting examples of suitable lubricants include fatty alcohols and their dicarboxylic acid esters, fatty acid esters of short-chain alcohols, fatty acids, fatty acid amides, metal soaps, oligomeric fatty acid esters, fatty acid esters of long-chain alcohols, montan waxes, polyethylene waxes, polypropylene waxes, natural and synthetic paraffin waxes, fluoropolymers and combinations thereof. Where used, the amount of the lubricant in the foam can be from greater than 0 to 5 wt %, from 0.1 to 4 wt %, or from 0.1 to 3 wt % of the total weight of the foam. Some suitable lubricants have been disclosed in Zweifel Hans et al., "Plastics Additives Handbook," Hanser Gardner Publications, Cincinnati, Ohio, 5th edition, Chapter 5, pages 511-552 (2001).

Optionally, the foams or foamable compositions disclosed herein can comprise an antistatic agent. Any antistatic agent that can increase the conductivity of the foams and to prevent static charge accumulation can be added to the foams disclosed herein. Non-limiting examples of suitable antistatic agents include conductive fillers (e.g., carbon black, metal particles and other conductive particles), fatty acid esters (e.g., glycerol monostearate), ethoxylated alkylamines, diethanolamides, ethoxylated alcohols, alkylsulfonates, alkylphosphates, quaternary ammonium salts, alkylbetaines and combinations thereof. Where used, the amount of the antistatic agent in the foam can be from greater than 0 to 5 wt %, from 0.01 to 3 wt %, or from 0.1 to 2 wt % of the total weight of the foam. Some suitable antistatic agents have been disclosed in Zweifel Hans et al., "Plastics Additives Handbook," Hanser Gardner Publications, Cincinnati, Ohio, 5th edition, Chapter 10, pages 627-646 (2001).

The processes of making polyolefin foams are described in C. P. Park, "Polyolefin Foam", Chapter 9 of Handbook of Polymer Foams and Technology, edited by D. Klempner and K. C. Frisch, Hanser Publishers, Munich (1991).

The ingredients of the foamable composition can be mixed or blended in any suitable mixing or blending devices known to skilled artisans. The ingredients in the foamable composition can then be mixed at a temperature below the decomposition temperature of the blowing agent and the cross-linking agent to ensure that all ingredients are homogeneously mixed and remain intact. After the foamable composition is relatively homogeneously mixed, the composition is shaped and then exposed to conditions (e.g. heat, pressure, shear, etc.) over a sufficient period of time to activate the blowing agent and the cross-linking agent to make the foam.

In some embodiments, the ingredients of the foamable composition can be mixed and melt blended by any mixing or blending device known to a person of ordinary skill in the art. Non-limiting examples of suitable mixing or blending devices include extruders, mixers, blenders, mills, dispersers, homogenizers and the like. In other embodiments, the blowing agent is dry-blended with the ethylene/$\alpha$-olefin interpolymer or the polymer blend before the foamable composition is heated to a molten form. In further embodiments, the blowing agent is added when the foamable composition is in a molten phase. In some embodiments, the foamable composition disclosed herein is extruded through a die where the cross-linking is activated. Next, the extruded foamable composition may be exposed to an elevated temperature to activate the blowing agent to form the foams.

The foams disclosed herein can be prepared by conventional extrusion foaming processes. The foam can generally be prepared by heating the ethylene/$\alpha$-olefin interpolymer or the polymer blend to form a plasticized or melt polymer material, incorporating therein a blowing agent to form a foamable composition, and extruding the foamable composition through a die to form foam products. Prior to mixing with the blowing agent, the ethylene/$\alpha$-olefin interpolymer can be heated to a temperature at or above its glass transition temperature or melting point. The blowing agent can be incorporated or mixed into the molten ethylene/$\alpha$-olefin interpolymer by any means known in the art such as with an extruder, mixer, blender, and the like. The blowing agent can be mixed with the molten ethylene/$\alpha$-olefin interpolymer at an

elevated pressure sufficient to prevent substantial expansion of the molten ethylene/α-olefin interpolymer and to generally disperse the blowing agent homogeneously therein. Optionally, a nucleating agent can be blended in the interpolymer melt or dry blended with the ethylene/α-olefin interpolymer prior to plasticizing or melting. The foamable composition can be cooled to a lower temperature to optimize physical characteristics of the foam structure. The foamable composition can be then extruded or conveyed through a die of desired shape to a zone of reduced or lower pressure to form the foam structure. The zone of lower pressure can be at a pressure lower than that in which the foamable composition is maintained prior to extrusion through the die. The lower pressure can be super-atmospheric or sub-atmospheric (vacuum), but is preferably at an atmospheric level.

In some embodiments, the foams disclosed herein are formed in a coalesced strand form by extrusion of the ethylene/α-olefin interpolymer through a multi-orifice die. The orifices can be arranged so that contact between adjacent streams of the molten extrudate occurs during the foaming process and the contacting surfaces adhere to one another with sufficient adhesion to result in a unitary foam structure. The streams of the molten extrudate exiting the die can take the form of strands or profiles, which can desirably foam, coalesce, and adhere to one another to form a unitary structure. Desirably, the coalesced individual strands or profiles should remain adhered in a unitary structure to prevent strand delamination under stresses encountered in preparing, shaping, and using the foams. Apparatuses and methods for producing foam structures in coalesced strand form are disclosed in U.S. Pat. Nos. 3,573,152 and 4,824,720.

In other embodiments, the foams disclosed herein are formed by an accumulating extrusion process as seen in U.S. Pat. No. 4,323,528. In the accumulating extrusion process, low density foams having large lateral cross-sectional areas are prepared by: 1) forming under pressure a foamable composition of the ethylene/α-olefin interpolymer and a blowing agent at a temperature at which the viscosity of the foamable composition is sufficient to retain the blowing agent when the foamable composition is allowed to expand; 2) extruding the foamable composition into a holding zone maintained at a temperature and pressure which does not allow the foamable composition to foam, the holding zone having an outlet die defining an orifice opening into a zone of lower pressure at which the foamable composition foams, and an openable gate closing the die orifice; 3) periodically opening the gate; 4) substantially concurrently applying mechanical pressure by a movable ram on the foamable composition to eject it from the holding zone through the die orifice into the zone of lower pressure, at a rate greater than that at which substantial foaming in the die orifice occurs and less than that at which substantial irregularities in cross-sectional area or shape occurs; and 5) permitting the ejected foamable composition to expand unrestrained in at least one dimension to produce the foam structure.

In some embodiments, the foams disclosed herein are formed into noncrosslinked foam beads suitable for molding into articles. To make the foam beads, discrete ethylene/α-olefin interpolymer particles such as granulated ethylene/α-olefin interpolymer pellets are: (1) suspended in a liquid medium in which they are substantially insoluble such as water; (2) impregnated with a blowing agent by introducing the blowing agent into the liquid medium at an elevated pressure and temperature in an autoclave or other pressure vessel; and (3) rapidly discharged into the atmosphere or a region of reduced pressure to expand to form the foam beads. This process is well taught in U.S. Pat. Nos. 4,379,859 and 4,464,484.

In a derivative of the above process, styrene monomer can be impregnated into the suspended ethylene/α-olefin interpolymer pellets prior to impregnation with blowing agent to form a graft interpolymer with the ethylene/α-olefin interpolymer. The resulted graft interpolymer beads can be cooled and discharged from the vessel substantially unexpanded. The beads are then expanded and molded by the conventional expanded polystyrene bead molding process. The process of making some graft interpolymer beads is described in U.S. Pat. No. 4,168,353.

The foam beads can be molded into articles by any method known to a person of ordinary skill in the art. In some embodiments, the foam beads are charged to the mold, compressed by compressing the mold, and heated with a heat source such as steam to effect coalescing and welding of the foam beads to form the articles. In other embodiments, the foam beads are impregnated with air or other blowing agent at an elevated pressure and temperature prior to charging to the mold. In further embodiments, the foam beads are heated prior to charging to the mold. The beads can then be molded to blocks or shaped articles by a suitable molding method known in the art. Some of the methods are taught in U.S. Pat. Nos. 3,504,068 and 3,953,558 and in C. P. Park, supra, p. 191, pp. 197-198, and pp. 227-229.

In some embodiments, the foams disclosed herein can be prepared by either compression molding or injection molding. In other embodiments, the foams are prepared by compression molding at a temperature above the decomposition temperatures of the peroxide and the blowing agent which is followed by a post expansion when the mold open. In further embodiments, the foams are prepared by injection molding the ethylene/α-olefin interpolymer melts at temperatures below the decomposition temperatures of the peroxide and the blowing agent into molds at temperature above the decomposition temperatures of the peroxide and the blowing agent which is followed by a post expansion after opening the molds (from 160 to 190° C.).

In some embodiments, microcellular thermoplastic vulcanizate ("TPV") foams could be made using supercritical fluids (e.g., CO or $N_2$). Such techniques are taught in U.S. Pat. Nos. 5,158,986; 5,160,674; 5,334,356; 5,866,053; 6,169,122; 6,284,810; and 6,294,115. The methods disclosed therein can be used in embodiments of the invention with or without modifications. TPV compositions based on the inventive polymers disclosed herein are taught in U.S. Provisional

Application No. 60/718,186, filed Sep. 16, 2005. Such TPV compositions could be used in embodiments of the invention to make microcellular TPV foams.

Blending of the Ingredients of the Foams

The ingredients of the foams, i.e., the ethylene/α-olefin interpolymer, the blowing agent, the optional second polymer component (e.g., EVA, polyethylene, and polypropylene) and additives (e.g., the cross-linking agent) can be mixed or blended using methods known to a person of ordinary skill in the art. Non-limiting examples of suitable blending methods include melt blending, solvent blending, extruding, and the like.

In some embodiments, the ingredients of the foams are melt blended by a method as described by Guerin et al. in U.S. Pat. No. 4,152,189. First, all solvents, if there are any, are removed from the ingredients by heating to an appropriate elevated temperature of 100° C. to 200° C. or 150° C. to 175° C. at a pressure of 667 Pa (5 torr) to 1333 Pa (10 torr). Next, the ingredients are weighed into a vessel in the desired proportions and the foam is formed by heating the contents of the vessel to a molten state while stirring.

In other embodiments, the ingredients of the foams are processed using solvent blending. First, the ingredients of the desired foam are dissolved in a suitable solvent and the mixture is then mixed or blended. Next, the solvent is removed to provide the foam.

In further embodiments, physical blending devices that can provide dispersive mixing, distributive mixing, or a combination of dispersive and distributive mixing can be used in preparing homogenous blends. Both batch and continuous methods of physical blending can be used. Non-limiting examples of batch methods include those methods using BRABENDER® mixing equipments (e.g., BRABENDER PREP CENTER®, available from C. W. Brabender Instruments, Inc., South Hackensack, N.J.) or BANBURY® internal mixing and roll milling (available from Farrel Company, Ansonia, Conn.) equipment. Non-limiting examples of continuous methods include single screw extruding, twin screw extruding, disk extruding, reciprocating single screw extruding, and pin barrel single screw extruding. In some embodiments, the additives can be added into an extruder through a feed hopper or feed throat during the extrusion of the ethylene/α-olefin interpolymer, the optional second polymer component or the foam. The mixing or blending of polymers by extrusion has been described in C. Rauwendaal, "Polymer Extrusion", Hanser Publishers, New York, N.Y., pages 322-334 (1986).

When one or more additives are required in the foams, the desired amounts of the additives can be added in one charge or multiple charges to the ethylene/α-olefin interpolymer, the second polymer component or the polymer blend. Furthermore, the addition can take place in any order. In some embodiments, the additives are first added and mixed or blended with the ethylene/α-olefin interpolymer and then the additive-containing interpolymer is blended with the second polymer component. In other embodiments, the additives are first added and mixed or blended with the second polymer component and then the additive-containing second polymer component is blended with the ethylene/α-olefin interpolymer. In further embodiments, the ethylene/α-olefin interpolymer is blended with the second polymer component first and then the additives are blended with the polymer blend.

Examples

Approximate conditions, properties, formulations, etc. for the preparation of the examples of the present disclosure are provided below.

*Preparation of Ethylene/α-olefin Interpolymers*

Sample ethylene/α-olefin interpolymers (Inventive OBC-1, Reference OBC-2 (outside the scope of the currently claimed invention), Comparative OBC-A, Comparative OBC-B, and Comparative OBC-C) are prepared as follows.

Continuous solution polymerizations are carried out in a computer controlled well-mixed reactor. Purified mixed alkanes solvent (ISOPAR™ E available from ExxonMobil Chemical Company), ethylene, 1-octene, and hydrogen (where used) are combined and fed to a 3.8 liter reactor. The feeds to the reactor are measured by mass-flow controllers. The temperature of the feed stream is controlled by use of a glycol cooled heat exchanger before entering the reactor. The catalyst component solutions are metered using pumps and mass flow meters. The reactor is run liquid-full at approximately 3620 kPag (525 psig) pressure. Upon exiting the reactor, water and additive are injected in the polymer solution. The water hydrolyzes the catalysts and terminates the polymerization reactions. The post reactor solution is then heated in preparation for a two-stage devolatization. The solvent and unreacted monomers are removed during the devolatization process. The polymer melt is extruded to a water bath for pelletization on a strand cutter.

Catalyst A1 is [N-(2,6-di(1-methylethyl)phenyl)amido)(2-isopropylphenyl)(α-naphthalen-2-diyl(6-pyridin-2-diyl)methane)]hafnium dimethyl, as discussed above.

Catalyst B2 is 1,2-bis-(3,5-di-t-butylphenylene)(1-(N-(2-methylcyclohexyl)-immino)methyl)(2-oxoyl)zirconium

dibenzyl, as discussed above.

Cocatalyst 1 is a mixture of methyldi(C14-18alkyl)ammonium salts of tetrakis(pentafluorophenyl)borate (hereinafter armeenium borate), prepared by reaction of a long chain trialkylamine (ARMEEN™ M2HT, available from Akzo-Nobel, Inc.), HCl and Li[B(C6F5)4], substantially as disclosed in U.S. Pat. No. 5,919,983, Ex. 2.

TEA is triethylaluminum. The chain shuttling agent is diethyl zinc (DEZ). The solvent is a hydrocarbon mixture (ISOPAR®E) obtainable from ExxonMobil Chemical Company and purified through beds of 13-X molecular sieves prior to use.

The process conditions for preparing Inventive OBC-1, Reference OBC-2 (outside the scope of the currently claimed invention), Comparative OBC-A, Comparative OBC-B, and Comparative OBC-C are shown below in Tables 1 and 2.

**TABLE 1**

| | $C_2H_4$ [kg/hr (lb/hr)] | $C_8H_{16}$ [kg/hr (lb/hr) ] | Solvent [kg/hr (lb/hr)] | $H_2$ (sccm ) | T (°C ) | Cat. A1 (ppm meta 1) | Cat. A1 Flow [kg/hr (lb solution/ hr)] | Cat. B2 (ppm meta 1) | Cat. B2 Flow [kg/hr (lb solution/ hr)] | DEZ (ppm meta 1) | DEZ Flow [kg/hr (lb solution/hr)] |
|---|---|---|---|---|---|---|---|---|---|---|---|
| **OBC -1** | 1.69 (3.72) | 1.88 (4.15) | 16.33 (36.0) | 30 | 125 | 149.6 | 0.102 (0.224) | 10.8 | 0.093 (0.204) | 2948 | 0.109 (0.241) |
| **OBC -2** | 1.85 (4.08) | 1.49 (3.28) | 16.15 (35.6) | 20 | 125 | 147.9 | 0.053 (0.117) | 6.5 | 0.160 (0.352) | 2948 | 0.104 (0.230) |
| **OBC -A** | 1.82 (4.01) | 1.86 (4.10) | 16.28 (35.9) | 24 | 125 | 147.9 | 0.083 (0.182) | 10.8 | 0.195 (0.431) | 2948 | 0.113 (0.249) |
| **OBC -B** | 1.81 (3.98) | 2.32 (5.12) | 18.28 (40.3) | 8 | 125 | 147.9 | 0.055 (0.121) | 43.2 | 0.092 (0.202) | 2948 | 0.103 (0.226) |
| **OBC -C** | 1.48 (3.26) | 2.52 (5.55) | 16.65 (36.7) | 15 | 125 | 147.9 | 0.057 (0.125) | 6.5 | 0.128 (0.283) | 2948 | 0.107 (0.235) |

**TABLE 2**

| | Cocat. 1 (ppm cocat.) | Cocat. 1 Flow [kg/hr (lb solution /hr)] | TEA (ppm metal) | TEA Flow [kg/hr (lb solution/hr) ] | [C2H4]/ [DEZ]1 | Poly rate2 [kg/hr (lb/hr)] | Conv. Wt%3 | Polymer wt% | Eff.4 |
|---|---|---|---|---|---|---|---|---|---|
| **OBC-1** | 1452 | 0.090 (0.199) | 309 | 0.109 (0.241) | 1398 | 2.10 (4.64) | 88.5 | 11.7 | 129.8 |
| **OBC-2** | 1452 | 0.054 (0.119) | 309 | 0.104 (0.230) | 1459 | 2.12 (4.67) | 89.6 | 11.8 | 239.2 |
| **OBC-A** | 1452 | 0.085 (0.188) | 309 | 0.113 (0.249) | 1429 | 2.15 (4.74) | 88.8 | 11.9 | 150.7 |
| **OBC-B** | 1452 | 0.079 (0.175) | 309 | 0.103 (0.226) | 1347 | 2.04 (4.49) | 90.3 | 10.1 | 169.3 |
| **OBC-C** | 1452 | 0.051 (0.112) | 309 | 0.107 (0.235) | 1274 | 2.04 (4.50) | 88.4 | 11.2 | 221.2 |

1Molar ratio in reactor
2Polymer Production Rate
3Weight percent ethylene conversion in reactor
4 Efficiency, kg polymer/g M where g M = g Hf + g Z

*Measurement of Polymer Properties*

The properties of the resultant sample polymers are provided in Tables 3 and 4 as determined by the following methodology.

Polymer density is measured in accordance with ASTM D-792. The result is reported in grams (g) per cubic centimeter, or g/cc.

Melt index ($I_2$ and $I_{10}$) is measured in accordance with ASTM D-1238 (190°C; 2.16 kg and 10 kg). The result is reported in dg/min.

Molecular weight distribution (MWD) is measured using Gel Permeation Chromatography (GPC). In particular, conventional GPC measurements are used to determine the weight-average (Mw) and number-average (Mn) molecular weight of the polymer and to determine the MWD (which is calculated as Mw/Mn). Samples are analyzed with a high-temperature GPC instrument. The method employs the well-known universal calibration method, based on the concept of hydrodynamic volume, and the calibration is performed using narrow polystyrene (PS) standards. The molecular weight determination is deduced by using narrow molecular weight distribution polystyrene standards (from Polymer Laboratories) in conjunction with their elution volumes. The equivalent polyethylene molecular weights are determined by using appropriate Mark-Houwink coefficients for polyethylene and polystyrene (as described by Williams and Ward in Journal of Polymer Science, Polymer Letters, Vol. 6, 621 (1968)) to derive the following equation:

$$\text{Mpolyethylene} = a * (\text{Mpolystyrene})^b.$$

In this equation, a = 0.4316 and b = 1.0 (as described in Williams and Ward, J. Polym. Sc., Polym. Let., 6, 621 (1968)). Polyethylene equivalent molecular weight calculations were performed using VISCOTEK TriSEC software Version 3.0.

Gel permeation chromatographic (GPC) system consists of either a Polymer Laboratories Model PL-210 or a Polymer Laboratories Model PL-220 instrument. The column and carousel compartments are operated at 140°C. Three Polymer Laboratories 10-micron Mixed-B columns are used. The solvent is 1,2,4 trichlorobenzene. The samples are prepared at a concentration of 0.1 grams of polymer in 50 milliliters of solvent containing 200 ppm of butylated hydroxytoluene (BHT). Samples are prepared by agitating lightly for 2 hours at 160°C. The injection volume used is 100 microliters and the flow rate is 1.0 ml/minute.

Calibration of the GPC column set is performed with 21 narrow molecular weight distribution polystyrene standards with molecular weights ranging from 580 to 8,400,000, arranged in 6 "cocktail" mixtures with at least a decade of separation between individual molecular weights. The standards are purchased from Polymer Laboratories (Shropshire, UK). The polystyrene standards are prepared at 0.025 grams in 50 milliliters of solvent for molecular weights equal to or greater than 1,000,000, and 0.05 grams in 50 milliliters of solvent for molecular weights less than 1,000,000. The polystyrene standards are dissolved at 80°C with gentle agitation for 30 minutes. The narrow standards mixtures are run first and in order of decreasing highest molecular weight component to minimize degradation. The polystyrene standard peak molecular weights are converted to polyethylene molecular weights using the following equation (as described in Williams and Ward, J. Polym. Sci., Polym. Let., 6, 621 (1968)): $M_{polypropylene} = 0.645(M_{polystyrene})$.

Differential Scanning Calorimetry (DSC) results are determined using a TAI model Q1000 DSC equipped with an RCS cooling accessory and an autosampler. A nitrogen purge gas flow of 50 ml/min is used. The sample is pressed into a thin film and melted in the press at 190° C and then air-cooled to room temperature (25° C). 3-10 mg of material is then cut into a 6 mm diameter disk, accurately weighed, placed in a light aluminum pan (ca 50 mg), and then crimped shut. The thermal behavior of the sample is investigated with the following temperature profile. The sample is rapidly heated to 180° C and held isothermal for 3 minutes in order to remove any previous thermal history. The sample is then cooled to -90° C at 10° C/min cooling rate and held at -90° C for 3 minutes. The sample is then heated to 180° C at 10° C/min heating rate. The cooling (Tc) and second heating curves (Tm) are recorded.

The DSC melting peak is measured as the maximum in heat flow rate (W/g) with respect to the linear baseline drawn between -30° C and end of melting. The heat of fusion is measured as the area under the melting curve between -30° C and the end of melting using a linear baseline. DSC can also be used to measure the soft segment melting temperature, as discussed in WO 2006/101966 A1.

$^{13}C$ NMR spectroscopy is one of a number of techniques known in the art for measuring comonomer incorporation into a polymer. An example of this technique is described for the determination of comonomer content for ethylene/$\alpha$-olefin copolymers in Randall (Journal of Macromolecular Science, Reviews in Macromolecular Chemistry and Physics, C29 (2 & 3), 201-317 (1989)). The basic procedure for determining the comonomer content of an ethylene/olefin interpolymer involves obtaining a $^{13}C$ NMR spectrum under conditions where the intensity of the peaks corresponding to the different carbons in a sample is directly proportional to the total number of contributing nuclei in the sample. Methods for ensuring this proportionality are known in the art and involve allowance for sufficient time for

relaxation after a pulse, the use of gated-decoupling techniques, relaxation agents, and the like. The relative intensity of a peak or group of peaks is obtained in practice from its computer-generated integral. After obtaining the spectrum and integrating the peaks, those peaks associated with the comonomer are assigned. This assignment can be made by reference to known spectra or literature, or by synthesis and analysis of model compounds, or by the use of isotopically labeled comonomers. The mole % comonomer can be determined by the ratio of the integrals corresponding to the number of moles of comonomer to the integrals corresponding to the number of moles of all of the monomers in the interpolymer, as described in the aforementioned Randall reference.

The soft segment weight percentage and hard segment weight percentage of an ethylene/olefin interpolymer of the present disclosure is determined by DSC, and mole % comonomer in the soft segment of an ethylene/olefin interpolymer of the present disclosure is determined by $^{13}C$ NMR spectroscopy and the methods described in WO 2006/101966 A1.

$^{13}C$ NMR Analysis: The samples are prepared by adding approximately 2.7 g of a 50/50 mixture of tetrachloroethane-$d^2$/orthodichlorobenzene to 0.2 g sample in a 10 mm NMR tube. The samples are dissolved and homogenized by heating the tube and its contents to 150° C. The data are collected using a JEOL Eclipse™ 400 MHz spectrometer, Bruker 400 MHz spectrometer, or a Varian Unity Plus™ 400 MHz spectrometer, corresponding to a $^{13}C$ resonance frequency of 100.5 MHz. The data is acquired using 256 transients per data file with a 6 second pulse repetition delay. To achieve minimum signal-to-noise for quantitative analysis, multiple data files are added together. The spectral width is 25,000 Hz with a minimum file size of 32K data points. The samples are analyzed at 120° C in a 10 mm broad band probe. The comonomer incorporation is determined using Randall's triad method (Randall, J. C.; JMS-Rev. Macromol. Chem. Phys., C29, 201-317 (1989).

DEZ levels (ppm) may be measured by standard industry procedure, such as mass balance or an XRF method.

Standard CRYSTAF Method: Branching distributions are determined by crystallization analysis fractionation (CRYSTAF) using a CRYSTAF 200 unit commercially available from PolymerChar, Valencia, Spain. The samples are dissolved in 1,2,4 trichlorobenzene at 160° C (0.66 mg/mL) for 1 hr and stabilized at 95° C for 45 minutes. The sampling temperatures range from 95 to 30° C at a cooling rate of 0.2° C/min. An infrared detector is used to measure the polymer solution concentrations. The cumulative soluble concentration is measured as the polymer crystallizes while the temperature is decreased. The analytical derivative of the cumulative profile reflects the short chain branching distribution of the polymer.

The CRYSTAF peak temperature and area are identified by the peak analysis module included in the CRYSTAF Software (Version 2001.b, PolymerChar, Valencia, Spain). The CRYSTAF peak finding routine identifies a peak temperature as a maximum in the dW/dT curve and the area between the largest positive inflections on either side of the identified peak in the derivative curve. To calculate the CRYSTAF curve, the preferred processing parameters are with a temperature limit of 70° C and with smoothing parameters above the temperature limit of 0.1, and below the temperature limit of 0.3.

The ethylene/α-olefin interpolymers of the present disclosure may be further characterized by an average block index (ABI), as determined by the methods of WO 2006/101966 A1.

**TABLE 3**

| | Density (g/cc) | $I_2$ (dg/min) | $I_{10}$ (dg/min) | Mw (g/mol) | Mn (g/mol) | Mw/Mn | Tm (°C) | Tc (°C) | Heat of Fusion (J/g) | DEZ level (ppm) |
|---|---|---|---|---|---|---|---|---|---|---|
| **OBC-1** | 0.879 | 0.9 | 6.1 | 118955 | 45491 | 2.62 | 121.2 | 99.0 | 59.4 | 153 |
| **OBC-2** | 0.886 | 1.0 | 6.7 | 111527 | 44459 | 2.51 | 121.5 | 100.7 | 79.3 | 145 |
| **OBC-A** | 0.891 | 1.0 | 6.7 | 111208 | 44322 | 2.51 | 121.7 | 103.2 | 82.8 | 155 |
| **OBC-B** | 0.890 | 1.0 | 6.5 | 115469 | 48340 | 2.39 | 120.7 | 104.0 | 75.9 | 148 |
| **OBC-C** | 0.865 | 1.1 | 7.9 | 133163 | 51752 | 2.57 | 120.1 | 95.8 | 34.8 | 154 |

**TABLE 4**

| | Soft segment Tm (°C) | Soft segment octene content (mol%) | Soft segment (%) | Hard segment (%) |
|---|---|---|---|---|
| **OBC-1** | 36.5 | 12 | 87 | 13 |
| **OBC-2** | 45.9 | 10 | 83 | 17 |
| **OBC-A** | 35.0 | 11 | 72 | 28 |

(continued)

| | Soft segment Tm (°C) | Soft segment octene content (mol%) | Soft segment (%) | Hard segment (%) |
|---|---|---|---|---|
| **OBC-B** | 6.4 | 18 | 63 | 37 |
| **OBC-C** | 6.7 | 19 | 88 | 12 |

*Physical Property Testing*

The physical properties of the resultant sample polymers are provided in Table 5 as determined by the following methodology.

Shore A Hardness of the sample polymers were measured according to ASTM D-2240.

Compression Set of the sample polymers were measured according to ASTM D-395 at 25% strain for 22 hr.

Flexural testing, including Flex Modulus, of the sample polymers were measured according to ASTM D-790.

Tensile Properties (including tensile strength and elongation at break) of the sample polymers were measured according to ASTM D-1708.

Tear strength of the sample polymers were measured according to ASTM D-624, Type C.

**TABLE 5**

| | Shore A hardnes s (10s) | Compressio n set, 23°C (%) | Compression set, 70°C (%) | Tear strength [N/mm (lbf/in)] | Flex Mod, 1% see, 0.21 mm/s (0.5 in/min) [kPa (ksi)] | Tensile strength (MPa) | Tensile elongation at break (%) |
|---|---|---|---|---|---|---|---|
| **OBC-1** | 83 | 33 | 67 | 47.8 (273) | 37232 (5.4) | 12.8 | 839 |
| **OBC-2** | 87 | 37 | 70 | 57.3 (327) | 55848 (8.1) | 16.5 | 825 |
| **OBC-A** | 90 | 35 | 51 | 65.3 (373) | 70327 (10.2) | 17.3 | 856 |
| **OBC-B** | 85 | 32 | 32 | 61.8 (353) | 49642 (7.2) | 17.1 | 1198 |
| **OBC-C** | 53 | 31 | 72 | 25.0 (143) | 8963 (1.3) | 8.5 | 2042 |

*Preparation of Foam Compositions*

Sample foam compositions (Inventive Examples 1, Reference Example2 (outside the scope of the currently claimed invention) and Comparative Examples A-C) were prepared in accordance with the ingredients listed in Table 6 (in parts by weight) and the following batch procedure.

**TABLE 6**

| **Ingredients** | **Ex. 1** | **Ex. 2** | **Ex. A** | **Ex. B** | **Ex. C** |
|---|---|---|---|---|---|
| OBC-1 | 100.00 | -- | -- | -- | -- |
| OBC-2 | -- | 100.00 | -- | -- | -- |
| OBC-A | -- | -- | 100.00 | -- | -- |
| OBC-B | -- | -- | -- | 100.00 | -- |
| OBC-C | -- | -- | -- | -- | 100.00 |
| Luperox® DC40P-SP2[1] | 2.66 | 2.66 | 2.66 | 2.66 | 2.66 |
| Celogen® AZ 130[2] | 3.50 | 3.50 | 3.50 | 3.50 | 3.50 |
| Zinc Oxide[3] | 0.35 | 0.35 | 0.35 | 0.35 | 0.35 |
| Stearic Acid[4] | 0.35 | 0.35 | 0.35 | 0.35 | 0.35 |

(continued)

| Ingredients | Ex. 1 | Ex. 2 | Ex. A | Ex. B | Ex. C |
|---|---|---|---|---|---|
| $CaCO_3$[5] | 5.00 | 5.00 | 5.00 | 5.00 | 5.00 |
| [1] Luperox® DC40P-SP2 is a peroxide by Arkema.<br>[2] Celogen® AZ 130 is an azodicarbonamide by Uniroyal Chemical Co.<br>The zinc oxide used is by Horsehead Company.<br>[4]The stearic acid used is by Fisher Scientific.<br>The calcium carbonate used is Imerys® Atomite $CaCO_3$. | | | | | |

The sample foam compositions were prepared via a Kobelco Mixer and a Reliable Two Roll Mill. The polymers were added first to the mixer. After the polymers melted, zinc oxide, stearic acid, and calcium carbonate were added to the mixer and mixed. The blowing agent (AZ 130) and peroxide (DC40P-SP2) were added next and mixed for an additional 3-5 minutes for a total mix time of 15 minutes at 15-30 rpm.

Each batch was removed from the mixer and then dropped and run through the heated roll mill to finish mixing any ingredients that may have stuck to the surface of the batch when removed from the mixer. The roll speeds were set at 10 rpm and 110°C. Each batch was mixed for 3-5 minutes depending on the appearance of the batch surface. Shorter mill times were used when the batch looked clean on the surface. This step was also used to help cool the material. The milled blanket was placed on a clean metal surface to cool until the next batch was ready for milling.

After cooling, each roll milled sheet was cut into 17.78 - 19.05 cm (7-7.5 inch) squares and placed inside a pre-heated 125°C mold with dimensions of 19.05 cm (7.5 inch) X 19.05 cm (7.5 inch) X 0.635 cm (0.25 inch). The vertical walls of the mold have a large draft angle of 30° so the foam can expand without resistance. The top and bottom surface of the mold consist of squares of thin sheet metal with Teflon sheets against the foam compound. The charge weight was determined by calculating the mold volume and adding enough compound (approximately 365g) to achieve a slight overfill of the mold (e.g., an additional 10% mass of compound). If the mold is under-filled, a portion of the foam will contain large cells that break through the skin. The large cells result from free foam expansion to fill the space in the mold. An overfill condition causes excessive flash, but does not produce any defects in the foam bun. If a more precise mass is needed to minimize flash, the initial foams can be deflashed and weighed to determine a final mass minus the flash. This mass can be used as the minimum loading level +10%.

The samples were preheated (no pressure) for 8 minutes and pressed at 20 tons for an additional 6 minutes. After the lower temperature, pre-foam molding step, the samples were removed and immediately placed into a Carver press (model 3467-0). The platen temperature was set at 180°C and pressure at 275790 kPa (40,000 psi).

After a 7 minute cure time, the press was opened; the foam expanded and was removed immediately from the mold and placed into a fume hood on non-stick sheets. The foam top-side length and width were measured immediately after placing into the hood (hot expansion ratio). Although the foam is essentially cool after a few hours, it continues to shrink and harden for 24 hours. Therefore, the sample foams tested were aged at least one day before further processing. The final dimensions of the top-side of the foam were measured again after 24 hours. This determined the final (cool) expansion ratio. The hot expansion and final expansion ratios of the sample foam compositions are listed in Table 7.

*Measurement of Foam Properties*

Several steps were taken to prepare the skin and foam samples for testing. The first step was to mark the full bun foam using a pattern template. The template was made from a scrap piece of foam (with skin), measured at 16.5 cm X 16.5 cm (6.5 in. X. 6.5 in.), and was placed over the full bun foam to locate an area free of blemishes and voids. The size of the template allowed the foams to fit on the Hobart Deli slicer (Model 1812) and provided enough surface area to cut tensile or tear specimen from a single sliced layer (skin or foam). Once the full bun foam was marked, the edge pieces were removed using a 25.4 cm (10 inch) vertical band saw. Using the newly cut "sample square" test piece, the skin data was collected first. Then one skin layer and one foam layer (2-3 mm thick) from the top and bottom of the sample square were removed using the Hobart slicer.

This procedure was repeated to make an additional skin layer and an additional foam layer from the top and bottom of the sample square (four layers from each sample square were made unless the foams were too soft, thin, or sticky to slice cleanly). As a result, the remaining sample squares were "all foam" and used to measure the foam density, hardness, rebound, etc.

The properties of the sample foam compositions (Inventive Example 1, Reference Example 2 (outside the scope of the currently claimed invention), Comparative Example A, Comparative Example B, and Comparative Example C) are provided in Tables 7 and 8 in accordance with the following methodology. Specifically, Table 7 provides the measured properties of the "all foam" samples, while Table 8 provides the measured properties of the foam samples with skin prior to

use of the Hobart slicer.

Foam densities of the samples were measured according to ASTM D-792.

Shrink percentages of the samples were measured as follows. After skin layers (top and bottom) were removed from the bun foams, the foam was cut into two approximately 7.62 cm (3 inch) X 7.62 cm (3 inch) samples, and one sample was placed in separate pre-heated ovens at 70°C and 100°C. The samples were removed after 24 hours and dimensions were re-measured immediately after removal from the oven and again after 24 hours of cooling at room temperature. The shrink percentage is calculated from the ratio of the surface area (after aging) / (before aging)*100%.

Shore A hardness of the samples were measured according to ASTM D-2240 (peak value).

Asker C is a measure of the hardness (or softness) of the foam with the larger the number, the harder the foam. The Asker C hardness of the samples were measured according to ASTM D-2240 (peak value).

Compression set properties of the samples were measured according to ASTM D-395.

Tensile strength and elongation (including toughness and 100% Mod) of the samples were measured according to ASTM D-638.

Abrasion of the samples were measured according to DIN 53516.

Type C tear of the samples were measured according to ASTM D-624.

Rebound percentage of the samples were measured as follows. A 1.59 cm (5/8 inch) diameter steel ball was dropped from a height of 50.8 cm (20 inches) onto the bun foam (skin and foam layers), moving the sample after each drop. The percent rebound is calculated as the ball rebound height (in inches)*100 / 20 using the equipment software (TT502 Ball Rebound Tester by Time Tech Inc.). The foam test piece (with and without skin) is a flat, single layer at least 0.953 cm (3/8 inches) thick.

Split tear strength of the samples were measured as follows. A 2.54 cm (1-inch) X 7.62 cm (3-inch) foam strip (no skin) is cut and notched with a razor to a depth of 1.27 cm (0.5 inches), as shown in FIG. 1. Two foam strips with the razor notch are pulled apart in an Instron at the rate of 5.08 cm per minute (2 inches per minute) until the tear progresses 1.27 cm (0.5 inches). The highest load recorded divided by sample width (2.54 cm (1 inch)) determines split tear strength.

**TABLE 7**

| | Ex. 1 | Ex. 2 | Ex. A | Ex. B | Ex. C |
|---|---|---|---|---|---|
| Foam Expansion Ratio (Hot) | 1.80 | 1.68 | 1.67 | 1.67 | 1.74 |
| Foam Expansion Ratio (Final) | 1.61 | 1.56 | 1.57 | 1.55 | 1.61 |
| Foam Shrink (SA, %), 70°C/24h | 9.0 | 5.1 | 1.3 | 2.5 | 9.0 |
| Foam Shrink (SA, %), 100°C/24h | 21.2 | 17.6 | 7.7 | 6.4 | 21.3 |
| Shore A, Foam | 24.0 | 29.6 | 33.6 | 33.2 | 10.8 |
| Asker C, Foam | 42.8 | 50.0 | 54.2 | 54.2 | 29.6 |
| Density, Foam [g/cc] | 0.156 | 0.159 | 0.171 | 0.170 | 0.154 |
| Rebound, Foam [%] | 58.8 | 55.0 | 49.6 | 49.0 | 67.0 |
| CSET 25%, 23°C/22h 30min | 25.8 | 23.7 | 24.7 | 28.8 | 32.2 |
| CSET 25%, 50°C/6h 30min | 65.1 | 51.2 | 50.0 | 61.4 | 55.2 |
| CSET 25%, 23°C/22h 24Hr | 11.0 | 10.1 | 7.0 | 7.8 | 13.5 |
| CSET 25%, 50°C/6h 24Hr | 52.0 | 42.6 | 42.9 | 27.7 | 35.8 |
| Tensile, Foam [kPa (PSI)] | 4089 (593) | 3916 (568) | 4420 (641) | 3971 (576) | 3337 (484) |
| Elong, Foam [%] | 192 | 168 | 162 | 155 | 217 |
| Toughness, Foam [N*mm (in*lbf)] | 1853 (16.4) | 1299 (11.5) | 1491 (13.2) | 1311 (11.6) | 1119 (9.9) |
| 100%Mod, Foam [kPa (PSI)] | 1124 (163) | 1344 (195) | 1669 (242) | 1724 (250) | 745 (108) |
| Split Tear, Foam [Kg/cm] | 2.5 | 3.4 | 3.7 | 4.0 | 1.7 |
| Type C Tear, Foam [N/m (lb/in)] | 13099 (74.)8 | 11996 (68.5) | 12767 (72.9) | 12609 (72.0) | 9807 (56.0) |

**TABLE 8**

| | Ex. 1 | Ex. 2 | Ex. A | Ex. B | Ex. C |
|---|---|---|---|---|---|
| Shore A, Skin | 40.4 | 46.8 | 53.0 | 53.6 | 25.0 |

(continued)

| | Ex. 1 | Ex. 2 | Ex. A | Ex. B | Ex. C |
|---|---|---|---|---|---|
| Asker C, Skin | 52.2 | 58.0 | 65.0 | 63.8 | 36.4 |
| Density, Skin [g/cc] | 0.184 | 0.183 | 0.184 | 0.192 | 0.174 |
| Rebound, Skin [%] | 63.4 | 60.2 | 54.6 | 52.8 | 71.8 |
| Tensile, Skin [kPa (PSI)] | 4757 (690) | 4757 (690) | 4813 (698) | 4868 (706) | 3123 (453) |
| Elong, Skin [%] | 198 | 166 | 154 | 145 | 209 |
| Toughness, Skin [N*mm (in*lbf)] | 2836 (25.1) | 2486 (22.0) | 2802 (24.8) | 2723 (24.1) | 1740 (15.4) |
| 100%Mod, Skin [kPa (PSI)] | 1469 (213) | 2020 (293) | 2310 (335) | 2717 (394) | 1007 (146) |
| Type C Tear, Skin [N/m (lb/in)] | 16427 (93.8) | 18704 (106.8) | 20928 (119.5) | 19527 (111.5) | 14115 (80.6) |
| DIN ABRASION 10N, Skin [mm3] | 574.9 | 226.7 | 238.3 | 192.0 | Too soft |

As seen in Tables 7 and 8, Inventive Example 1 and Reference Example 2 are the only foam compositions with a combination of a foam split tear strength greater than 2.5 kg/cm, a foam rebound percentage of greater than 50.0%, and a skin rebound percentage of greater than 50.0%, while still showing comparatively good compression set and tensile properties relative to the comparative examples. Accordingly, the novel foam formulations of the present disclosure, with particular foam densities and polymer crystallinities, surprisingly and unexpectedly provide a unique balance of resiliency, high temperature compression set, rebound, and foam split tear strength.

## Claims

1. A foam composition comprising at least one ethylene/$\alpha$-olefin interpolymer comprising at least one soft segment and at least one hard segment, wherein a hard segment is a block of polymerized units in which the comonomer content is less than 5 wt.%, based on the weight of the polymer, and wherein a soft segment is a block of polymerized units in which the comonomer content is greater than 5 wt.%, based on the weight of the polymer,

   wherein the foam composition has a density of from 0.10 g/cc to 0.50 g/cc, wherein the ethylene/$\alpha$-olefin interpolymer has a density of from 0.877 g/cc to 0.895 g/cc, wherein the at least one soft segment has a comonomer content of from 12 mol% to 14 mol %, and wherein the ethylene/$\alpha$-olefin interpolymer:

   (a) has a $M_w/M_n$ from 1.7 to 3.5, at least one melting point, $T_m$, in degrees Celsius, and a density, d, in grams/cubic centimeter, wherein the numerical values of $T_m$ and d correspond to the relationship:

$$T_m \geqq -2002.9+4538.5(d)-2422.2(d)^2;$$

   wherein the polymer density, the foam density, the comonomer content, the Mw/Mn, and the Tm are measured as described in the examples part of the description.

2. The foam composition of claim 1, wherein the ethylene/$\alpha$-olefin interpolymer has a melt index of from 0.3 dg/min to 6.0 dg/min (ASTM D-1238 at 190°C, 2.16 kg).

3. The foam composition of claim 1, further comprising a foam split tear strength of greater than 2.5 kg/cm, a foam rebound percentage of greater than 50.0%, and a skin rebound percentage of greater than 50.0%, wherein the foam split tear strength, the foam rebound percentage, and the skin rebound percentage are measured as described in the "Measurement of Foam Properties" part of the description.

4. The foam composition of claim 1, wherein the $\alpha$-olefin of the ethylene/$\alpha$-olefin interpolymer is a $C_{6-10}$ $\alpha$-olefin.

5. The foam composition of claim 1, wherein the ethylene/$\alpha$-olefin interpolymer is cross-linked by a cross-linking agent.

6. The foam composition of claim 5, wherein the cross-linking agent is a peroxide.

7. The foam composition of claim 1, wherein the foam is a closed-cell foam and further comprises a blowing agent.

8. The foam composition of claim 7, wherein the blowing agent is an azodicarbonamide.

9. The foam composition of claim 1, further comprising a second polymer component selected from an ethylene/α-olefin random copolymer and an ethylene vinyl acetate copolymer.

10. The foam composition of claim 1, further comprising at least one additive, wherein the additive is a nucleating agent, a stability control agent, a filler, a pigment, an antioxidant, an acid scavenger, a UV stabilizer, a flame retardant, a lubricant, a processing aid, an extrusion aid, a blowing agent activator, a coagent, or a combination thereof.

11. A foamed article comprising the foam composition of claim 1.

12. The foamed article of claim 11, wherein the foamed article is a footwear article.

**Patentansprüche**

1. Schaumzusammensetzung, umfassend mindestens ein Ethylen/α-Olefin-Interpolymer, das mindestens ein weiches Segment und mindestens ein hartes Segment umfasst, wobei ein hartes Segment ein Block aus polymerisierten Einheiten ist, in dem der Comonomergehalt weniger als 5 Gew.-% beträgt, bezogen auf das Gewicht des Polymers, und wobei ein weiches Segment ein Block aus polymerisierten Einheiten ist, in dem der Comonomergehalt mehr als 5 Gew.-% beträgt, bezogen auf das Gewicht des Polymers,

   wobei die Schaumzusammensetzung eine Dichte von 0,10 g/cm$^3$ bis 0,50 g/cm$^3$ aufweist, wobei das Ethylen/α-Olefin-Interpolymer eine Dichte von 0,877 g/cm$^3$ bis 0,895 g/cm$^3$ aufweist, wobei das mindestens eine weiche Segment einen Comonomergehalt von 12 Mol-% bis 14 Mol-% aufweist und wobei das Ethylen/α-Olefin-Interpolymer:

   (a) ein $M_w/M_n$ von 1,7 bis 3,5, mindestens einen Schmelzpunkt $T_m$ in Grad Celsius und eine Dichte d in Gramm/Kubikzentimeter aufweist, wobei die nummerischen Werte von $T_m$ und d der folgenden Beziehung entsprechen:

$$T_m \geqq -2002{,}9 + 4538{,}5(d) - 2422{,}2(d)^2;$$

   wobei die Polymerdichte, die Schaumdichte, der Comonomergehalt, das $M_w/M_n$ und der $T_m$ gemessen werden wie im Teil "Beispiele" der Beschreibung beschrieben.

2. Schaumzusammensetzung nach Anspruch 1, wobei das Ethylen/α-Olefin-Interpolymer einen Schmelzindex von 0,3 dg/min bis 6,0 dg/min (ASTM D-1238 bei 190 °C, 2,16 kg) aufweist.

3. Schaumzusammensetzung nach Anspruch 1, ferner umfassend eine Schaumreißfestigkeit von mehr als 2,5 kg/cm, einen Schaum-Rebound-Prozentsatz von mehr als 50,0 % und einen Haut-Rebound-Prozentsatz von mehr als 50,0 %, wobei die Schaumreißfestigkeit, der Schaum-Rebound-Prozentsatz und der Haut-Rebound-Prozentsatz gemessen werden wie im Teil der Beschreibung "Messung der Schaumeigenschaften" beschrieben.

4. Schaumzusammensetzung nach Anspruch 1, wobei das α-Olefin des Ethylen/α-Olefin-Interpolymers ein $C_{0\text{-}10\alpha}$-Olefin ist.

5. Schaumzusammensetzung nach Anspruch 1, wobei das Ethylen/α-Olefin-Interpolymer durch ein Vernetzungsmittel vernetzt wird.

6. Schaumzusammensetzung nach Anspruch 5, wobei das Vernetzungsmittel ein Peroxid ist.

7. Schaumzusammensetzung nach Anspruch 1, wobei der Schaum ein geschlossenzelliger Schaum ist und ferner ein Treibmittel umfasst.

8. Schaumzusammensetzung nach Anspruch 7, wobei das Treibmittel ein Azodicarbonamid ist.

9. Schaumzusammensetzung nach Anspruch 1, die ferner eine zweite Polymerkomponente umfasst, die aus einem Ethylen/$\alpha$-Olefin-Randomcopolymer und einem Ethylenvinylacetatcopolymer ausgewählt ist.

10. Schaumzusammensetzung nach Anspruch 1, ferner umfassend mindestens ein Additiv, wobei das Additiv ein Keimbildner, ein Stabilitätskontrollmittel, ein Füllstoff, ein Pigment, ein Antioxidans, ein Säurefänger, ein UV-Stabilisator, ein Flammschutzmittel, ein Schmiermittel, ein Verarbeitungshilfsmittel, ein Extrusionshilfsmittel, ein Treibmittelaktivator, ein Coagens oder eine Kombination davon ist.

11. Geschäumter Artikel, umfassend die Schaumzusammensetzung nach Anspruch 1.

12. Geschäumter Artikel nach Anspruch 11, wobei der geschäumte Artikel ein Fußbekleidungsartikel ist.

**Revendications**

1. Composition de mousse comprenant au moins un interpolymère éthylène/$\alpha$-oléfine comprenant au moins un segment souple et au moins un segment dur, dans laquelle un segment dur est un bloc d'unités polymérisées dans lequel la teneur en comonomères est inférieure à 5 % en poids, sur la base du poids du polymère, et dans laquelle un segment souple est un bloc d'unités polymérisées dans lequel la teneur en comonomères est supérieure à 5 % en poids, sur la base du poids du polymère,

   dans laquelle la composition de mousse a une densité allant de 0,10 g/cm$^3$ à 0,50 g/cm$^3$, dans laquelle l'interpolymère éthylène/$\alpha$-oléfine a une densité allant de 0,877 g/cm$^3$ à 0,895 g/cm$^3$, dans laquelle l'au moins un segment souple a une teneur en comonomères allant de 12 % en moles à 14 % en moles, et dans laquelle l'interpolymère éthylène/$\alpha$-oléfine :

   (a) a un rapport $M_w/M_n$ allant de 1,7 à 3,5, au moins un point de fusion, $T_m$, en degrés Celsius, et une densité, d, en grammes/centimètre cube, dans laquelle les valeurs numériques de $T_m$ et de d correspondent à la relation :

$$T_m \geqq -2002{,}9 + 4538{,}5(d) - 2422{,}2(d)^2 \text{ ;}$$

   dans laquelle la densité du polymère, la densité de la mousse, la teneur en comonomères, le rapport Mw/Mn et le Tm sont mesurés comme indiqué dans la partie de la description consacrée aux exemples.

2. Composition de mousse selon la revendication 1, dans laquelle l'interpolymère éthylène/$\alpha$-oléfine a un indice de fusion allant de 0,3 dg/min à 6,0 dg/min (norme ASTM D-1238 à 190 °C, 2,16 kg).

3. Composition de mousse selon la revendication 1, comprenant en outre une résistance à la rupture de la mousse supérieure à 2,5 kg/cm, un pourcentage de rebond de la mousse supérieur à 50,0 % et un pourcentage de rebond de la peau supérieur à 50,0 %, dans laquelle la résistance à la rupture de la mousse, le pourcentage de rebond de la mousse et le pourcentage de rebond de la peau sont mesurés comme décrit dans la partie « Mesure des propriétés de la mousse » de la description.

4. Composition de mousse selon la revendication 1, dans laquelle l'$\alpha$-oléfine de l'interpolymère éthylène/$\alpha$-oléfine est une $\alpha$-oléfine en $C_{6-10}$.

5. Composition de mousse selon la revendication 1, dans laquelle l'interpolymère éthylène/$\alpha$-oléfine est réticulé par un agent de réticulation.

6. Composition de mousse selon la revendication 5, dans laquelle l'agent de réticulation est un peroxyde.

7. Composition de mousse selon la revendication 1, dans laquelle la mousse est une mousse à cellules fermées et comprend en outre un agent gonflant.

**8.** Composition de mousse selon la revendication 7, dans laquelle l'agent gonflant est un azodicarbonamide.

**9.** Composition de mousse selon la revendication 1, comprenant en outre un second composant polymère choisi parmi un copolymère aléatoire éthylène/$\alpha$-oléfine et un copolymère éthylène-acétate de vinyle.

**10.** Composition de mousse selon la revendication 1, comprenant en outre au moins un additif, dans laquelle l'additif est un agent de nucléation, un agent de contrôle de la stabilité, une charge, un pigment, un antioxydant, un piégeur d'acide, un stabilisateur d'UV, un retardateur de flamme, un lubrifiant, un auxiliaire de traitement, un auxiliaire d'extrusion, un activateur d'agent gonflant, un coagent, ou une combinaison de ceux-ci.

**11.** Article en mousse comprenant la composition de mousse selon la revendication 1.

**12.** Article en mousse selon la revendication 11, dans lequel l'article en mousse est un article de type chaussure.

FIG. 1

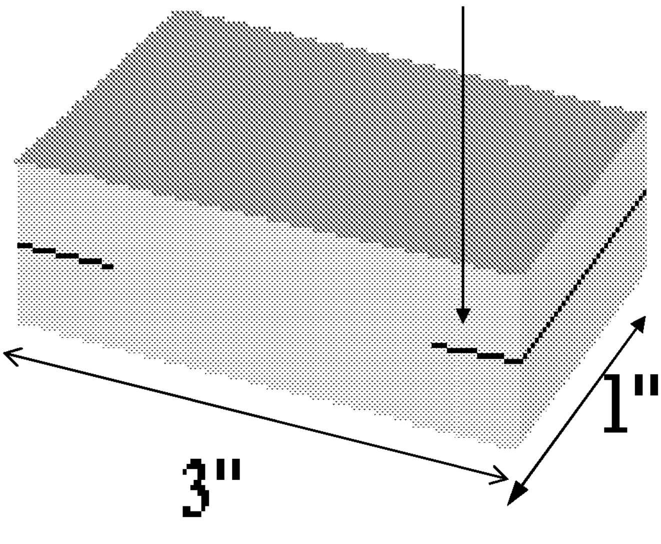

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006099631 A
- US 2008009586 A
- KR 101466388
- WO 2006101966 A1
- US 7608668 B
- US 7893166 B
- US 7666918 B
- WO 2006101966 A
- US 55390604
- US 66293705
- US 66293905
- US 605662938 A
- US 2005008916 W
- US 2005008915 W
- US 2005008917 W
- WO 0340195 A
- US 20030204017 A
- US 42902403
- WO 0424740 A
- US 0204017 A
- US 20040010103 A
- US 6268444 B
- US 2003004286 A
- US 4762890 A
- US 4927888 A
- US 4950541 A
- US 5424016 A
- US 5585058 A
- US 3284421 A
- US 3297674 A
- US 5266627 A
- US 3644230 A
- US 4214054 A
- US 6103803 A
- US 3573152 A
- US 4824720 A
- US 4323528 A
- US 4379859 A
- US 4464484 A
- US 4168353 A
- US 3504068 A
- US 3953558 A
- US 5158986 A
- US 5160674 A
- US 5334356 A
- US 5866053 A
- US 6169122 B
- US 6284810 B
- US 6294115 B
- US 71818605
- US 4152189 A, Guerin
- US 5919983 A


### Non-patent literature cited in the description


- **MARKOVICH, RONALD P.** ; **HAZLITT, LONNIE G.** ; **SMITH, LINLEY**. Development of gel-permeation chromatography-Fourier transform infrared spectroscopy for characterization of ethylene-based polyolefin copolymers. *Polymeric Materials Science and Engineering*, 1991, vol. 65, 98-100
- **DESLAURIERS, P. J.** ; **ROHLFING, D. C.** ; **SHIEH, E. T.** Quantifying short chain branching microstructures in ethylene-1-olefin copolymers using size exclusion chromatography and Fourier transform infrared spectroscopy (SEC-FTIR). *Polymer*, 2002, vol. 43, 59-170
- **SENDIJAREVIC et al.** Polymeric Foams And Foam Technology. Hanser Gardner Publications, 2004, 505-547
- **ZWEIFEL HANS et al.** Plastics Additives Handbook. Hanser Gardner Publications, 2001, 725-812
- Encyclopedia of Chemical Technology. Interscience Publishers, 1968
- **DANIEL SEEM**. Organic Peroxides. Wiley-Interscience, 1970, vol. 1
- Polyolefin Foam. **C. P. PARK**. Handbook of Polymer Foams and Technology. Hanser Publishers, 1991, 198-204
- **ZWEIFEL HANS et al.** Plastics Additives Handbook. Hanser Gardner Publications, 2001
- **ZWEIFEL HANS et al.** Plastics Additives Handbook. Hanser Gardner Publications, 2001, vol. 1, 1-140
- **ZWEIFEL HANS et al.** Plastics Additives Handbook. Hanser Gardner Publications, 2001, 141-426
- **ZWEIFEL HANS et al.** Plastics Additives Handbook. Hanser Gardner Publications, 2001, 813-882
- **ZWEIFEL HANS et al.** Plastics Additives Handbook. Hanser Gardner Publications, 2001, 901-948
- **ZWEIFEL HANS et al.** Plastics Additives Handbook. Hanser Gardner Publications, 2001, 511-552

- **ZWEIFEL HANS et al.** Plastics Additives Handbook. Hanser Gardner Publications, 2001, 627-646
- Polyolefin Foam. **C. P. PARK**. Handbook of Polymer Foams and Technology. Hanser Publishers, 1991
- **C. RAUWENDAAL**. Polymer Extrusion. Hanser Publishers, 1986, 322-334
- **WILLIAMS** ; **WARD**. *Journal of Polymer Science, Polymer Letters*, 1968, vol. 6, 621
- **WILLIAMS** ; **WARD**. *J. Polym. Sc., Polym. Let.*, 1968, vol. 6, 621
- **WILLIAMS** ; **WARD**. *J. Polym. Sci., Polym. Let.*, 1968, vol. 6, 621
- **RANDALL**. *Journal of Macromolecular Science, Reviews in Macromolecular Chemistry and Physics*, 1989, vol. C29, 201-317
- **RANDALL, J. C.** *JMS-Rev. Macromol. Chem. Phys.*, 1989, vol. C29, 201-317